# EUROPEAN PATENT SPECIFICATION

(11) **EP 3 316 219 B1**
(45) Date of publication and mention of the grant of the patent: **03.08.2022**
(21) Application number: 17195161.9
(22) Date of filing: 06.10.2017
(51) Int. Cl.: G06T 7/292

(54) **IMAGE PROCESSING APPARATUS, IMAGE PROCESSING METHOD, AND CARRIER MEANS**
BILDVERARBEITUNGSVORRICHTUNG, BILDVERARBEITUNGSVERFAHREN UND AUFZEICHNUNGSMEDIEN
APPAREIL ET PROCÉDÉ DE TRAITEMENT D'IMAGE ET SUPPORT D'ENREGISTREMENT

(30) Priority: 28.10.2016 JP 2016212211
(43) Date of publication of application: 02.05.2018
(73) Proprietor: Ricoh Company, Ltd., Tokyo 143-8555 (JP)
(72) Inventor: OHMURA, Keiji, Ohta-ku, Tokyo 143-8555 (JP); KOMOTO, Shotaro, Ohta-ku, Tokyo 143-8555 (JP); YAMANA, Hajime, Ohta-ku, Tokyo 143-8555 (JP)
(74) Representative: Watkin, Timothy Lawrence Harvey

(56) References cited:
- JP-A- 2016 042 306
- US-A1- 2010 157 064
- CAI Q ET AL: "TRACKING HUMAN MOTION IN STRUCTURED ENVIRONMENTS USING A DISTRIBUTED-CAMERA SYSTEM", IEEE TRANSACTIONS ON PATTERN ANALYSIS AND MACHINE INTELLIGENCE, IEEE COMPUTER SOCIETY, USA, vol. 21, no. 11, 1 November 1999 (1999-11-01), pages 1241-1247, XP000897105, ISSN: 0162-8828, DOI: 10.1109/34.809119
- Petr Doubek ET AL: "Cinematographic Rules Applied to a Camera Network", , 1 January 2004 (2004-01-01), XP055229784, Retrieved from the Internet: URL:http://homes.esat.kuleuven.be/~konijn/ publications/2004/eth_biwi_00289.pdf [retrieved on 2015-11-19]
- YIMING LI ET AL: "Utility-Based Camera Assignment in a Video Network: A Game Theoretic Framework", IEEE SENSORS JOURNAL, IEEE SERVICE CENTER, NEW YORK, NY, US, vol. 11, no. 3, 1 March 2011 (2011-03-01), pages 676-687, XP011344034, ISSN: 1530-437X, DOI: 10.1109/JSEN.2010.2051148
- PATRICK H. KELLY ET AL: "An architecture for multiple perspective interactive video", PROCEEDINGS OF THE THIRD ACM INTERNATIONAL CONFERENCE ON MULTIMEDIA , MULTIMEDIA '95, 1 January 1995 (1995-01-01), pages 201-212, XP055230157, New York, New York, USA DOI: 10.1145/217279.215267 ISBN: 978-0-89791-751-3

## Description

### BACKGROUND OF THE INVENTION

### Field of the Invention

The present invention relates to an image processing apparatus, an image processing method, and carrier means such as a recording medium.

### Description of the Related Art

Efforts to visualize the movement of people and objects such as transport vehicles running in the factory, workers working in the field, visiting customers walking in the commercial facilities as "flow lines" are spreading in the world. Techniques for acquiring flow lines include a technique that uses position information in a wireless local area network (LAN), a technique that assigns an ultrasonic transmitter to a tracking target and specifies the position with a receiver, and a technique that installs a beacon and receives an ID transmitted from the beacon with a smartphone to capture the position. However, tracking with these techniques requires a condition that a target of tracking carries a terminal such as a wireless LAN transmitter or an ultrasonic transmitter. In addition, as a method for acquiring a flow line without requiring a tracking target to carry any terminal, a technique for tracking a tracking target appearing in a video captured by a camera with an image processing technique to specify the position is already known.

In this manner, as a technique for tracking a tracking target appearing in a video by an image processing technique to obtain a flow line, JP-2016-042306-A discloses a trajectory drawing apparatus. The trajectory drawing apparatus includes a frame reading means for reading a frame of a video obtained by imaging a tracking target, a tracking target area setting means for setting a tracking target area for the tracking target in the frame read by the frame reading means, a tracking means for tracking the tracking target area between a plurality of frames read by the frame reading means, a drawing means for drawing a motion trajectory of the tracking target based on a tracking result by the tracking means, and a display control means for displaying the motion trajectory drawn by the drawing means on a display device.

However, according to the technique described in JP-2016-042306-A, when the acquisition of a wide range of a flow line is attempted, there are cases where the tracking target is hidden by obstacles and the tracking target does not appear due to restriction of the angle of view if a single camera is used and thus, it is required to arrange multiple cameras. In this case, there has been a disadvantage that the tracking target tracked by a certain camera cannot be continuously tracked across the cameras when the tracking target appears on another camera.

Cai, Q., and Aggarwal, J.K. (1999), "Tracking Human Motion in Structured Environments Using a Distributed-Camera System", IEEE Transactions on Pattern Analysis and Machine Intelligence, vol. 21, pp 1241-7, describe a technique of tracking coarse human models from sequences of synchronized monocular grayscale images in multiple camera coordinates. Patrick H. Kelly et al: "An architecture for multiple perspective interactive video", Proceedings of the Third ACM International Conference on Multimedia, Multimedia '95, 1 January 1995 (1995-01-01), pages 201-212 proposes a system to provide automated analysis and interactive access to data coming from multiple cameras.

### SUMMARY OF THE INVENTION

In view of the above, according to one aspect of the present invention, an image processing apparatus includes: an acquirer (306) configured to acquire a plurality of frames of video data respectively captured by a plurality of imaging devices; a detector (309) configured to detect a tracking target in any one of the frames acquired by the acquirer (306); and a determiner (311) configured to determine, when the detector (309) detects the tracking target from two or more frames captured by two or more imaging devices among the plurality of imaging devices, one of the two or more imaging devices as a target on which tracking processing for the tracking target is to be performed; a manager (313) configured to store, to a storage device, position information on the tracking target detected by the detector (309) in the frame captured by the imaging device on which the tracking processing is being performed, wherein when the detector (309) detects that the tracking target has disappeared from an outer peripheral portion of an area imaged by the imaging device on which the tracking processing is being performed, the manager (313) is configured to: stop storing position information on the tracking target in the frame to the storage device, and store information on a position at which the tracking target has disappeared to the storage device as position information on the tracking target in the frame until a time point after the tracking target is newly detected on one of the plurality of imaging devices.

According to another aspect of the present invention, a computer implemented image processing method comprises: acquiring (S11) a plurality of frames of video data respectively captured by a plurality of imaging devices; detecting a tracking target in any one of the acquired frame; determining (S25, S45), when the detecting detects the tracking target from two or more frames captured by two or more imaging devices among the plurality of imaging devices, one of the two or more imaging devices as a target on which tracking processing for the tracking target is to be performed; detecting that the tracking target has disappeared from an outer peripheral portion of an area imaged by the imaging device on which the tracking processing is being performed; stop storing position information on the tracking target in the frame to the storage device, and storing information on a position at which the tracking target has disappeared to the storage device as position information on the tracking target in the frame until a time point after the tracking target is newly detected on one of the plurality of imaging devices.

According to one or more embodiments of the present invention, when a tracking target is tracked by a plurality of imaging devices, the tracking target can be tracked across the imaging devices.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an example of a general arrangement of an image processing system according to a first embodiment;
FIG. 2 is a diagram illustrating an example of a case where a plurality of imaging devices of the image processing system according to the first embodiment are arranged at a production site;
FIG. 3 is a diagram illustrating an example of a hardware configuration of an information processing apparatus according to the first embodiment;
FIG. 4 is a diagram illustrating an example of a configuration of functional blocks of the information processing apparatus according to the first embodiment;
FIG. 5 is a flowchart illustrating example operation of color registration, performed by the information processing apparatus, according to the first embodiment;
FIG. 6 is a diagram illustrating an example of a state in which a video is displayed on a tracking screen displayed on a display unit of the information processing apparatus according to the first embodiment;
FIG. 7 is a diagram for explaining an operation of registering a color of a tracking target in the information processing apparatus according to the first embodiment;
FIG. 8 is a diagram illustrating an example of a state in which all videos of the respective imaging devices are displayed on the tracking screen displayed on the display unit of the information processing apparatus according to the first embodiment;
FIG. 9 is a diagram illustrating an example of a case where a tracking target is detected in a frame of a video of a specific imaging device;
FIG. 10 is a diagram illustrating a state in which the tracking target detected in the frame of the video of the specific imaging device has moved to an end of the frame;
FIG. 11 is a diagram illustrating a state in which the tracking target detected in the frame of the video of the specific imaging device has disappeared from the frame;
FIG. 12 is a diagram illustrating a state in which the tracking target that has disappeared from the frame of the video of the specific imaging device is detected in a frame of a video of another imaging device;
FIG. 13 is a diagram illustrating a state in which the tracking target detected in the frame of the video of the another imaging device is being tracked;
FIG. 14 is a diagram illustrating a state in which the tracking target is detected in a frame of a video of still another imaging device while the tracking target detected in the frame of the video of the another imaging device is being tracked;
FIG. 15 is a diagram for explaining a behavior of determining which of tracking targets detected in frames of videos of two imaging devices is to be tracked;
FIGs. 16A and 16B (FIG. 16) are a flowchart illustrating example operation of tracking, performed by the information processing apparatus, according to the first embodiment;
FIG. 17 is a diagram illustrating an example of a configuration of functional blocks of an information processing apparatus according to a second embodiment;
FIG. 18 is a diagram illustrating an example of a case where a tracking target is detected in a frame of a video of a specific imaging device;
FIG. 19 is a diagram illustrating a state in which the tracking target detected in the frame of the video of the specific imaging device has moved to a catch window;
FIG. 20 is a diagram illustrating a state in which the tracking target detected in the frame of the video of the specific imaging device has disappeared from the catch window;
FIG. 21 is a diagram illustrating a state in which the tracking target that has disappeared from the catch window of the frame of the video of the specific imaging device is detected in a frame of a video of another imaging device;
FIG. 22 is a diagram illustrating a state in which the tracking target detected in the frame of the video of the specific imaging device has moved to a point before reaching the catch window;
FIG. 23 is a diagram illustrating a state in which the tracking target detected in the frame of the video of the specific imaging device has disappeared at a point before reaching the catch window;
FIG. 24 is a diagram illustrating a state in which the tracking target that has disappeared outside of the catch window of the frame of the video of the specific imaging device is again detected in the frame of the same imaging device;
FIG. 25 is a diagram illustrating a state in which the tracking target that has disappeared outside of the catch window of the frame of the video of the specific imaging device is detected in a frame of a video of another imaging device; and
FIGs. 26A and 26B (FIG. 26) are a flowchart illustrating example operation of tracking, performed by the information processing apparatus, according to the second embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

Embodiments of an image processing apparatus, an image processing system, an image processing method, and a program according to the present invention will be described in detail below with reference to the drawings. The present invention is not limited by the following embodiments and constituent elements in the following embodiments include constituent elements which can be easily conceived by those skilled in the art, substantially the same constituent elements, and constituent elements within a range of so-called equivalents. Furthermore, various omissions, substitutions, modifications, and combinations of the constituent elements can be made without departing from the gist of the following embodiments.

### [First Embodiment]

### (General Arrangement of Image Processing System)

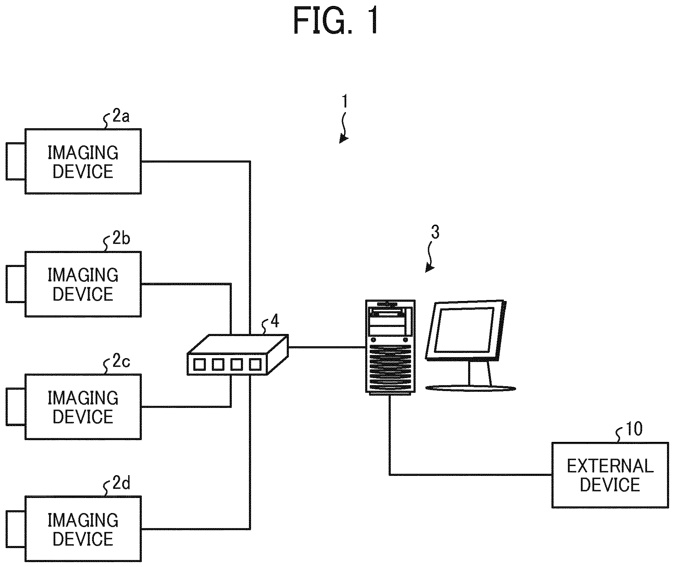

FIG. 1 is a diagram illustrating an example of a general arrangement of an image processing system according to a first embodiment.

The general arrangement of the image processing system 1 according to the present embodiment will be described with reference to FIG. 1.

As illustrated in FIG. 1, the image processing system 1 of the present embodiment includes imaging devices 2a to 2d, an information processing apparatus 3, and a hub 4.

Each of the imaging devices 2a to 2d is a video camera that converts light from a subject into an electric signal to image (capture) the subject to generate video data. The video data is a moving image containing a plurality of frames (image data), which are captured in, for example, 10 [frames per second, FPS] or 25 [FPS]. For example, the imaging devices 2a to 2d image a worker working in a production facility, a production line, or the like where products are manufactured to generate the video data.

In a case where the imaging devices 2a to 2d are referred to without being distinguished or generically referred to, the imaging devices 2a to 2d are simply referred to as "imaging devices 2". In addition, the image processing system 1 includes the four imaging devices 2 in FIG. 1, but the image processing system 1 is not limited to this configuration and may include any other number of imaging devices 2.

The information processing apparatus 3 is a personal computer (PC), a work station, or the like that functions as an image processing apparatus that executes image processing based on the video data captured by the imaging device 2. The information processing apparatus 3 is connected to an external device 10 in a production facility or the like so as to enable communication by, for example, a fieldbus standard.

The hub 4 is a line concentrator compatible with the Ethernet (registered trademark) standard for connecting the imaging devices 2a to 2d to the information processing apparatus 3. For example, when the hub 4 is compatible with the Ethernet standard, data communication is performed between the imaging devices 2a to 2d and the information processing apparatus 3 according to a protocol such as transmission control protocol (TCP)/Internet protocol (IP). In this case, the imaging devices 2a to 2d and the information processing apparatus 3 have media access control (MAC) addresses for communicating according to the TCP/IP protocol and additionally, IP addresses such as private IP addresses are allocated.

Although the hub 4 illustrated in FIG. 1 relays communication according to the TCP/IP protocol, the hub 4 is not limited to this example. As an exemplary mode, the information processing apparatus 3 may have a video graphics array (VGA) terminal or a universal serial bus (USB) port such that the plurality of imaging devices 2 are concentrated on the hub 4 via a VGA cable or a USB cable and then connected to the information processing apparatus 3.

In this embodiment, each imaging device 2 has been described as being connected to the information processing apparatus 3 via the hub 4, but the imaging device 2 is not limited to this configuration. A configuration may be employed in which the imaging device 2 is connected via a network such as a local area network (LAN), a dedicated line, or the Internet.

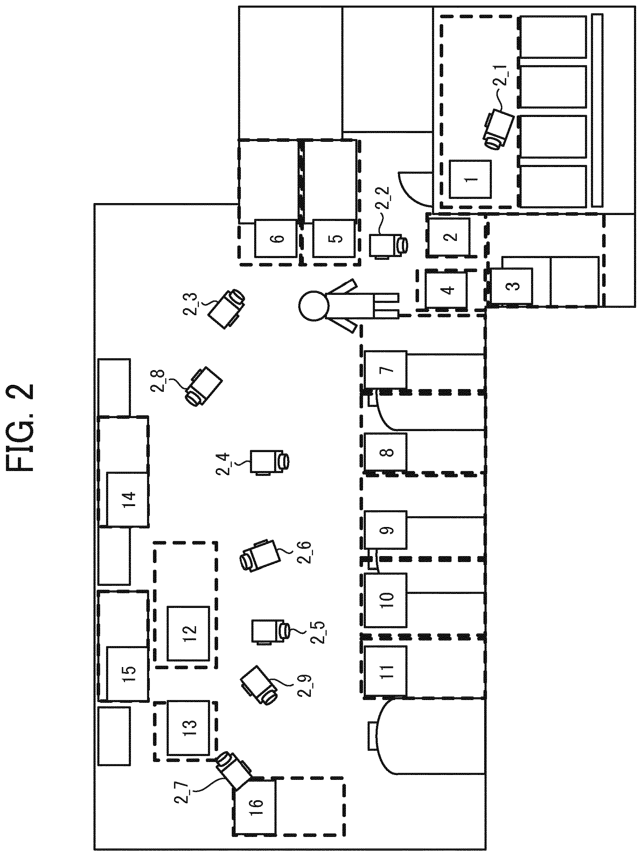

FIG. 2 is a diagram illustrating an example of a case where the plurality of imaging devices of the image processing system according to the first embodiment is arranged at a production site. A state in which the plurality of imaging devices 2 of the image processing system 1 are arranged at the production site will be described with reference to FIG. 2.

The production site illustrated in FIG. 2 is assumed to have processes from "1" to "16". When the flow line of a worker at each process of this production site is analyzed, it is recommended to exhaustively arrange the plurality of imaging devices 2 such that the plurality of imaging devices 2 can image each process. For example, in the example illustrated in FIG. 2, nine imaging devices 2 (imaging devices 2_1 to 2_9) are arranged at the production site such that each process can be exhaustively imaged. For example, the imaging device 2_1 is arranged so as to be able to image an area of a process "1", the imaging device 2_2 is arranged so as to be able to image respective areas of processes "2" to "4", and the imaging device 2_3 is arranged so as to be able to image respective areas of processes "5" and "6". The imaging device 2_4 is arranged so as to be able to image respective areas of processes "7" to "9", the imaging device 2_5 is disposed so as to be able to image respective areas of processes "10" and "11", and the imaging device 2_6 is arranged so as to be able to image an area of a process "12". Additionally, the imaging device 2_7 is arranged so as to be able to image respective areas of processes "13" and "15", the imaging device 2_8 is arranged so as to be able to image an area of a process "14", and the imaging device 2_9 is arranged so as to be able to image an area of a process "16".

In the following explanation, a configuration including four imaging devices 2 connected as illustrated in FIG. 1 will be described as an example.

### (Hardware Configuration of Information Processing Apparatus)

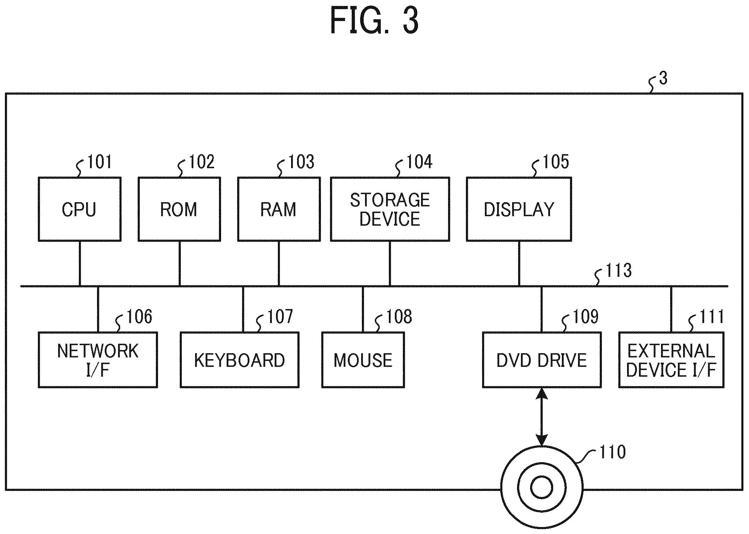

FIG. 3 is a diagram illustrating an example of a hardware configuration of the information processing apparatus according to the first embodiment. An example of the hardware configuration of the information processing apparatus 3 of the present embodiment will be described with reference to FIG. 3.

As illustrated in FIG. 3, the information processing apparatus 3 includes a central processing unit (CPU) 101, a read only memory (ROM) 102, a random access memory (RAM) 103, a storage device 104, a display 105, a network interface (I/F) 106, a keyboard 107, a mouse 108, a digital versatile disc (DVD) drive 109, and an external device interface (I/F) 111.

The CPU 101 controls entire operation of the information processing apparatus 3. The ROM 102 is a nonvolatile memory that stores programs such as basic input/output system (BIOS) and firmware for the information processing apparatus 3. The RAM 103 is a volatile memory used as a work area of the CPU 101.

The storage device 104 is a memory such as a hard disk drive (HDD) or a solid state drive (SSD) capable of storing various types of data such as video data captured by the imaging device 2, setting information, and tracking result information to be described later. While in FIG. 3, the storage device 104 is incorporated in the information processing apparatus 3, the storage device 104 may be provided external to the information processing apparatus 3.

The display 105 is any desired display that displays various types of information such as a cursor, a menu, a window, a character, or an image, or a screen of an application that executes an image determination behavior by the information processing apparatus 3. The display 105 is, for example, a cathode ray tube (CRT) display, a liquid crystal display (LCD), or an organic electro luminescence (EL) display. The display 105 is connected to a main assembly of the information processing apparatus 3 by a video graphics array (VGA) cable, a high-definition multimedia interface (HDMI) (registered trademark) cable, or the like, or is connected by an Ethernet cable.

The network I/F 106 is an interface for connecting the information processing apparatus 3 to the hub 4 to enable data communication. The network I/F 106 is, for example, a network interface card (NIC) that enables communication using the TCP/IP protocol. Specifically, the information processing apparatus 3 acquires video data from the imaging device 2 via the hub 4 and the network I/F 106.

The keyboard 107 is an input device used to, for example, select characters, numbers, and various instructions, move a cursor, and set setting information. The mouse 108 is an input device, for example, for selecting and executing various instructions, selecting a processing target, moving a cursor, and setting setting information.

The DVD drive 109 is a device to control reading, writing, and deletion of data to and from the DVD 110 as an example of a detachable storage medium.

The external device I/F 111 is an interface for connecting to the external device 10 to perform data communication. The external device I/F 111 is, for example, an interface card that enables communication by the fieldbus standard. Specifically, the information processing apparatus 3 performs data communication with the external device 10 via the external device I/F 111.

The CPU 101, the ROM 102, the RAM 103, the storage device 104, the display 105, the network I/F 106, the keyboard 107, the mouse 108, the DVD drive 109, and the external device I/F 111 described above are connected to each other via a bus 113 such as an address bus and a data bus so as to be able to communicate. When the display 105 is connected by an Ethernet cable, the display 105 is connected to the network I/F 106. In this case, data communication is performed by a protocol such as TCP/IP.

### (Block Configuration of Information Processing Apparatus)

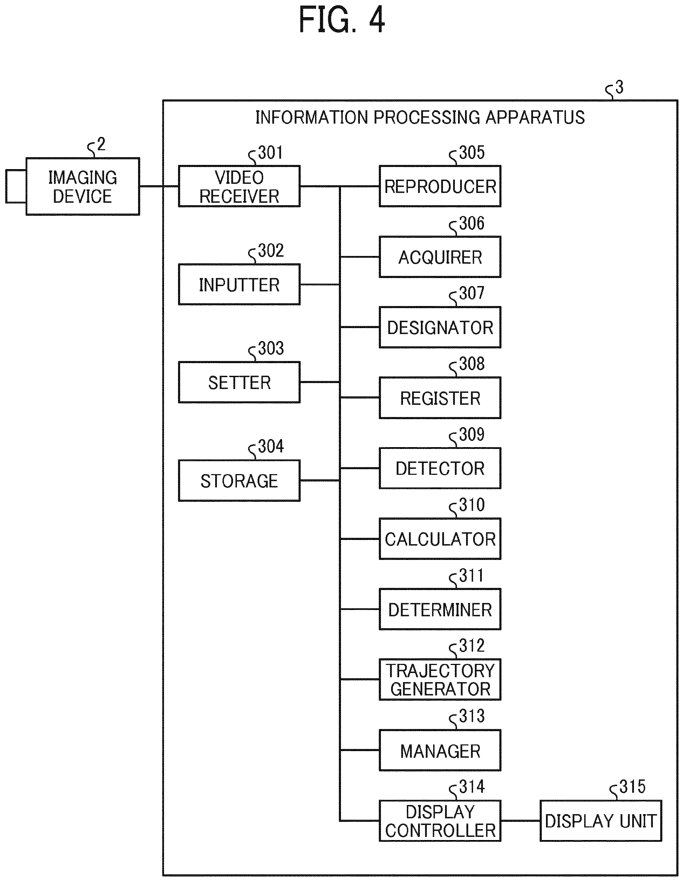

FIG. 4 is a diagram illustrating an example of a configuration of functional blocks of the information processing apparatus according to the first embodiment. A block configuration of the information processing apparatus 3 will be described with reference to FIG. 4.

As illustrated in FIG. 4, the information processing apparatus 3 includes a video receiver 301, an inputter 302, a setter 303, a storage 304, a reproducer 305, an acquirer 306, a designator 307, a register 308, a detector 309, a calculator 310, a determiner 311, a trajectory generator 312 (trajectory display unit), a manager 313, a display controller 314, and a display unit 315. In order to simplify the explanation, description will be made with illustration of the hub 4 omitted in FIG. 4.

The video receiver 301 is a functional unit to receive video data from the imaging device 2 via the hub 4. The video receiver 301 stores the received video data to the storage 304. The video receiver 301 is implemented by the network I/F 106 illustrated in FIG. 3.

The inputter 302 is a device used to perform an operation input for causing the information processing apparatus 3 to execute color registration processing, tracking processing for a tracking target, and so on. The inputter 302 is implemented by the keyboard 107 and mouse 108 illustrated in FIG. 3.

The setter 303 is a functional unit to set various types of setting information in accordance with an operation signal from the inputter 302 operated by a user to store to the storage 304. For example, the setter 303 sets information indicating a predetermined range centered on a reference color registered by the register 308 as described later (hereinafter referred to as "tracking parameter" in some cases) and stores the set tracking parameter to the storage 304. Here, when the reference color is expressed in an RGB color space in regard to the predetermined range centered on the reference color, an upper limit value obtained by adding a predetermined amount to an R value of the reference color and a lower limit value obtained by subtracting the predetermined amount from the R value are set, such that the predetermined range centered on the R value of the reference color is defined. The same applies to a G value and a B value of the reference color. Note that different values may be set for the R value, the G value, and the B value as the predetermined amount. The setter 303 is implemented by a program executed by the CPU 101 illustrated in FIG. 3.

The storage 304 is a functional unit to store various types of data such as video data received by the video receiver 301, setting information, and the tracking result information to be described later. The storage 304 identifies which imaging device 2 has generated video data in regard to the video data received by the video receiver 301 to store. The storage 304 is implemented by, for example, the RAM 103 or the external storage device 104 illustrated in FIG. 3. The storage 304 is included in the information processing apparatus 3 as illustrated in FIG. 4 but not limited to this configuration. For example, the storage 304 may be an external storage device or may be provided in an external device such as a server device.

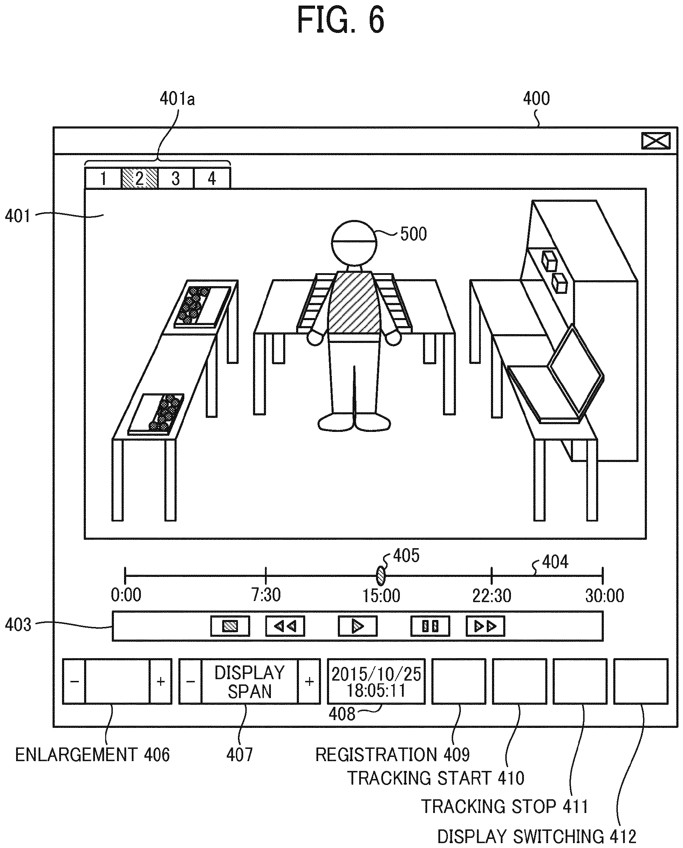

The reproducer 305 is a functional unit to send video data acquired from the storage 304 to the display controller 314 in accordance with an operation signal from the inputter 302 operated by the user and cause the display controller 314 to reproduce and display the video data on the display unit 315. Specifically, as illustrated in FIG. 6 to be described later as an example, the reproducer 305 reproduces and displays the video data on an individual display section 401 of a tracking screen 400 displayed on the display unit 315. The reproducer 305 is implemented by a program executed by the CPU 101 illustrated in FIG. 3.

The acquirer 306 is a functional unit to acquire a frame on which the tracking processing for the tracking target is to be performed, from the video data stored in the storage 304. The acquirer 306 is implemented by a program executed by the CPU 101 illustrated in FIG. 3.

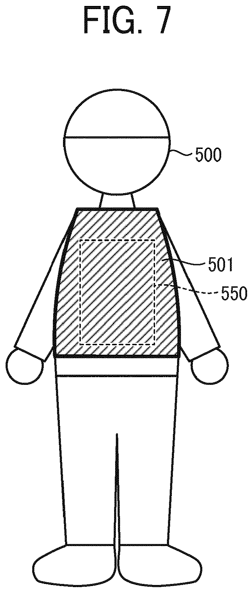

The designator 307 is a functional unit to designate, from a display area (for example, the individual display section 401 illustrated in FIG. 6 to be described later) used to display the video data on the display unit 315 in accordance with an operation signal from the inputter 302 operated by the user, a designation area (for example, a designation area 550 illustrated in FIG. 7 to be described later) for specifying a color as feature information to be used in the tracking processing for the tracking target. The designator 307 stores information on the designated designation area to the storage 304 in association with each imaging device 2. The designator 307 is implemented by a program executed by the CPU 101 illustrated in FIG. 3.

The register 308 is a functional unit to specify the reference color based on a pixel value indicating the color of the designation area designated by the designator 307 and store (register) information on the specified reference color to the storage 304. Here, the pixel value of the frame of the video data displayed on the individual display section 401 is information indicating a color based on, for example, an RGB color space or an HSV color space. Specifically, for example, the register 308 calculates an average value of the pixel values of pixels included in the designation area and specifies the average value as the reference color. The register 308 may specify the pixel value of a pixel at the center of the designation area as the reference color. The register 308 is implemented by a program executed by the CPU 101 illustrated in FIG. 3.

The detector 309 is a functional unit to detect the tracking target in a frame on which the tracking processing for the tracking target is to be performed, based on the reference color (the tracking parameter set by the setter 303) registered by the register 308.

Specifically, the detector 309 executes processing such as extraction processing, binarization processing, and labeling processing on a frame on which the tracking processing for the tracking target is to be performed and detects an area corresponding to a block including a pixel of a color falling within the above-described predetermined range centered on the reference color (hereinafter referred to as "reference color range" in some cases) as a tracking target. The detector 309 is implemented by a program executed by the CPU 101 illustrated in FIG. 3.

Although the detector 309 detects an area corresponding to a block including a pixel of a color falling within the reference color range as a tracking target, the detector 309 is not limited to this configuration. For example, the register 308 may specify a shape present within the designation area designated by the designator 307 to store (register) information on the specified shape (an example of the feature information) to the storage 304 such that the detector 309 detects a shape similar or identical to the registered shape as a tracking target.

In addition, the detector 309 is not limited to detecting the tracking target in each frame of the video data. For example, the detector 309 may detect the tracking target in a frame acquired by the acquirer 306 at predetermined time intervals. When the tracking target is detected in each frame, a frame rate for detection may be settable. Meanwhile, when the tracking target is detected at predetermined time intervals, the predetermined time interval may be settable.

When the tracking target is detected in frames of two or more imaging devices, the calculator 310 serves as a functional unit to calculate a movement amount per unit time (for example, a time interval between frames) of the tracking target and the area of the tracking target for each frame and calculate a ratio of the movement amount to the area. The calculator 310 is implemented by a program executed by the CPU 101 illustrated in FIG. 3.

When the tracking target is detected in frames of two or more imaging devices, the determiner 311 serves as a functional unit to determine a frame (imaging device 2) on which the tracking processing for the tracking target is performed, based on the ratio of the movement amount to the area of the tracking target calculated by the calculator 310 for each frame. Specifically, the determiner 311 determines a frame corresponding to the largest ratio among the ratios calculated by the calculator 310 as a frame for the tracking processing for the tracking target. As a result, since a frame in which the movement amount of the tracking target appearing in the frame is long and the movement amount is expected to be further extended due to a small area of the tracking target is determined as the frame for the tracking processing, the quantity of information on the flow line is increased and thus, the analysis accuracy of the flow line of the tracking target can be improved. The determiner 311 is implemented by a program executed by the CPU 101 illustrated in FIG. 3.

As described above, the determiner 311 determines a frame (imaging device 2) on which the tracking processing for the tracking target is performed, based on the ratio of the movement amount to the area of the tracking target. However, the determiner 311 is not limited to this configuration. For example, the determiner 311 may determine a frame (imaging device 2) on which the tracking processing for the tracking target is performed, based on the movement amount of the tracking target. This is effective in a case where, for example, the length of a flow line of the tracking target is desired to be recorded for a long time when the flow line is analyzed. Alternatively, the determiner 311 may determine a frame (imaging device 2) on which the tracking processing for the tracking target is performed, based on the area of the tracking target. This is effective in a case where, for example, an imaging device 2 with a frame in which the tracking target appears large in size is determined and a fine flow line of the tracking target is desired to be recorded when the flow line of the tracking target is analyzed. In addition, this is effective in a case where, for example, an imaging device 2 with a frame in which the tracking target appears small in size is determined and an overall movement of the tracking target is desired to be stored when the flow line of the tracking target is analyzed.

The trajectory generator 312 is a functional unit to generate a plot or a trajectory line (flow line) indicating the trajectory of the tracking target and cause the display controller 314 to superimpose the plot or the trajectory line (flow line) on the video data being reproduced and displayed on the tracking screen 400 to display. Specifically, when the trajectory line (flow line) is displayed, the trajectory generator 312 connects the center point of the tracking target detected in a certain frame and the center point of the tracking target detected in the next frame and so forth by a line among the frames of the video data read from the storage 304 such that this line is superimposed on the video data as a trajectory line (flow line) when displayed. Alternatively, when the plot is displayed, the trajectory generator 312 superimposes a plot on the video data at the position of the center point of the tracking target detected in each frame of the video data read from the storage 304 to display. The trajectory generator 312 may connect any point (pixel) at least included in the tracking target to generate the trajectory line (flow line) or the plot, instead of the center point of the tracking target. The trajectory generator 312 is implemented by a program executed by the CPU 101 illustrated in FIG. 3.

The manager 313 is a functional unit to start or stop the tracking processing for the tracking target specified by the reference color registered by the register 308 in accordance with an operation signal from the inputter 302 operated by the user in regard to the video data displayed on the tracking screen 400. The manager 313 also manages entire operation of the information processing apparatus 3. The manager 313 is implemented by a program executed by the CPU 101 illustrated in FIG. 3.

The display controller 314 is a functional unit to control a display operation of the display unit 315. Specifically, the display controller 314 displays the video data acquired by the reproducer 305, the setting information set by the setter 303, the designation area designated by the designator 307, and the like on the display unit 315. The display controller 314 is implemented by a program (driver) executed by the CPU 101 illustrated in FIG. 3.

The display unit 315 is a display to display various types of data under the control of the display controller 314. In particular, in the present embodiment, the display unit 315 displays the tracking screen 400 to be described later and so on by the function of a program (application) executed by the CPU 101 illustrated in FIG. 3. The display unit 315 is implemented by the display 105 illustrated in FIG. 3.

All or part of the video receiver 301, the setter 303, the reproducer 305, the acquirer 306, the designator 307, the register 308, the detector 309, the calculator 310, the determiner 311, the trajectory generator 312, the manager 313, and the display controller 314 illustrated in FIG. 4 may be implemented by a hardware circuit such as an application specific integrated circuit (ASIC) or a field-programmable gate array (FPGA) instead of a program as software.

In addition, each functional unit illustrated in FIG. 4 conceptually indicates the function and is not limited to such a configuration. For example, a plurality of functional units illustrated as independent functional units in FIG. 4 may be configured as one functional unit. On the other hand, a function of one functional unit in FIG. 4 may be divided into a plurality of functions so as to be configured as a plurality of functional units.

In order to simplify the following description, the expression that the display controller 314 displays the accepted data on the display unit 315 is assumed to be merely expressed that a functional unit that has sent data to the display controller 314 displays the data on the display unit 315 (or a screen displayed by the display unit 315). For example, in a case where the reproducer 305 sends video data to the display controller 314 and causes the display controller 314 to reproduce and display the video data on the display unit 315, this case is merely expressed that the reproducer 305 reproduces and displays the video data on the display unit 315.

### (Color Registration Processing)

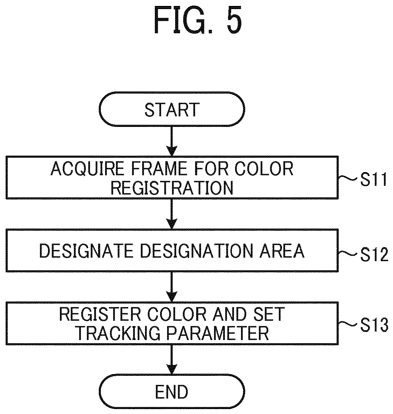

FIG. 5 is a flowchart illustrating an example of a flow of the color registration processing by the information processing apparatus according to the first embodiment. FIG. 6 is a diagram illustrating an example of a state in which a video is displayed on the tracking screen displayed on the display unit of the information processing apparatus according to the first embodiment. FIG. 7 is a diagram for explaining an operation of registering a color of the tracking target in the information processing apparatus according to the first embodiment. The flow of the color registration processing by the information processing apparatus 3 according to the present embodiment will be described with reference to FIGS. 5 to 7.

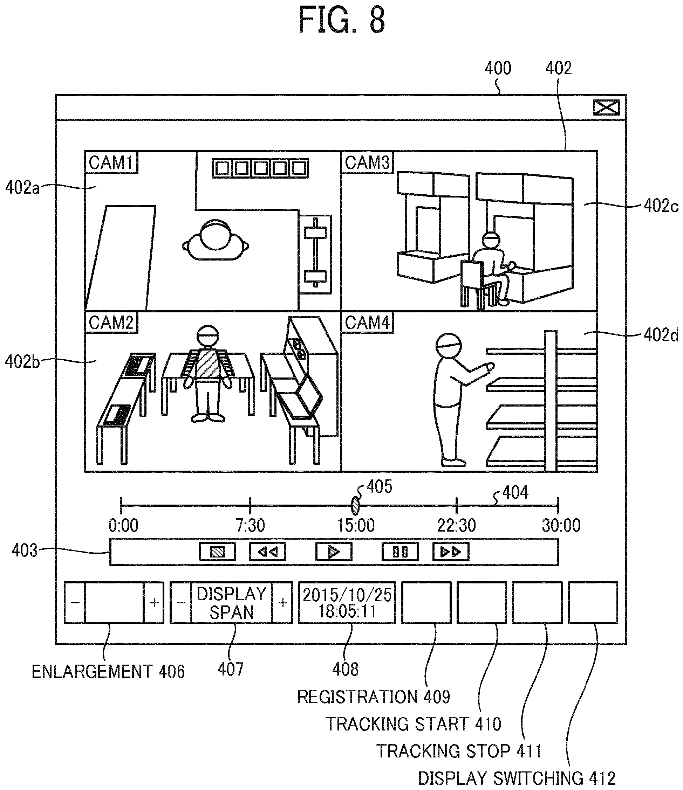

First, in explaining the flow of the color registration processing, the configuration of the tracking screen 400 will be described with reference to FIG. 6. The tracking screen 400 is a screen for registering a color as the feature information during the color registration processing and performing the tracking processing for a specific tracking target reproduced and displayed on the individual display section 401 or a whole display section 402 illustrated in FIG. 8 to be described later. As illustrated in FIG. 6, the tracking screen 400 includes the individual display section 401 (display area), a camera selection tab 401a, a video operation button section 403, a seek bar 404, a slider 405, a scaling button section 406, a span change button section 407, a time display section 408, a registration button 409, a tracking start button 410, a tracking stop button 411, and a display switching button 412.

The individual display section 401 is a display area on which the video data acquired from the storage 304 is reproduced and displayed by the reproducer 305 in accordance with an operation signal from the inputter 302 operated by the user. In the example in FIG. 6, when the user operates the inputter 302 to select a camera selection tab 401a of "2", the storage 304 reproduces and displays the video data captured by the imaging device 2b on the individual display section 401.

The camera selection tab 401a is an operation key for allowing the user to select which video data is to be displayed on the individual display section 401 from among the video data of the imaging devices 2a to 2d the user desires to reproduce and display. For example, the video data captured by the imaging devices 2a to 2d are linked to "1" to "4", respectively, and the example in FIG. 6 indicates an example where the video data of "2", that is, the imaging device 2b is selected.

The video operation button section 403 is a group of buttons to reproduce, rewind, fast forward, stop, and pause the video data on the individual display section 401 through the user's operation on the inputter 302. The seek bar 404 is a rod-like shape assembly indicating the time of the video data being reproduced and displayed on the individual display section 401, depending on the position of the slider 405 arranged on top of the seek bar 404. The slider 405 is a shape assembly serving as an operation key to slide to a position on the seek bar 404 corresponding to the imaging time (the time at which the displayed frame is captured) of the video data being reproduced and displayed on the individual display section 401. Conversely, when the user operates the inputter 302 to slide the slider 405, a frame of the video data at the imaging time corresponding to the position on the seek bar 404 where the slider 405 is located is displayed by the reproducer 305 on the individual display section 401.

The scaling button section 406 is a group of buttons that enlarges or reduces the display size of the video data being reproduced and displayed by the reproducer 305 on the individual display section 401 through the user's operation on the inputter 302. For example, every time an enlargement button in the scaling button section 406 is pressed, the display size of the video data is enlarged at a predetermined enlargement ratio. For example, the display size of the video data is enlarged at 120%, 140%, ... with a normal display state as 100%.

The span change button section 407 is a group of buttons with which a display span of the seek bar 404 is enlarged or reduced by the reproducer 305 through the user's operation on the inputter 302. Note that the reproducer 305 is not necessarily required to enlarge or reduce the display span of the seek bar 404 and a different functional unit illustrated in FIG. 4 may be responsible.

The time display section 408 is a display area to display the imaging date and the imaging time of the video data being reproduced and displayed by the reproducer 305 on the individual display section 401.

The registration button 409 is a button to cause the register 308 to specify the reference color for the designation area designated by the designator 307 and register (store to the storage 304) information on the specified reference color.

The tracking start button 410 is a button to cause, when pressed through the user's operation of the inputter 302, the manager 313 to start the tracking processing for the tracking target specified by the reference color in the video data being reproduced and displayed on the individual display section 401. The tracking stop button 411 is a button to cause, when pressed through the user's operation on the inputter 302, the manager 313 to stop the tracking processing for the tracking target being performed on the video data being reproduced and displayed on the individual display section 401.

Next, a specific flow of the color registration processing will be described referring to FIG. 5. The tracking screen 400 illustrated in FIG. 6 indicates a state in which the video data corresponding to the imaging device 2b is reproduced and displayed by the reproducer 305.

### <Step S11>

First, while the video data is reproduced and displayed on the individual display section 401, the reproducer 305 pauses the video data being reproduced and displayed on the individual display section 401 when a pause button in the video operation button section 403 is pressed through the user's operation on the inputter 302 at a timing when a portion of an image for which the color registration processing is desired is displayed. As illustrated in FIG. 6, a worker 500 appears in the frame of the paused video data. Then, the acquirer 306 acquires the frame displayed on the individual display section 401 from the paused video data. Then, the processing proceeds to step S12.

### <Step S12>

Here, as illustrated in FIG. 7, the information processing apparatus 3 according to the present embodiment assumes a tracking target 501 of the worker 500 as an example of the target of tracking in the frame being displayed on the individual display section 401. The tracking target 501 is a part of an outerwear worn by the worker 500 and assumed to have a specific color.

In accordance with the user's operation on the inputter 302 (for example, a drag operation using the mouse 108), the designator 307 designates the designation area 550 of the tracking target 501 in the frame acquired by the acquirer 306, that is, the frame being displayed on the individual display section 401, as illustrated in FIG. 7, in order to specify a color as the feature information to be used in the tracking processing for the tracking target.

The designation area may be designated by the designator 307 while the frame being displayed on the individual display section 401 is enlarged or reduced in size with the enlargement button or a reduction button in the scaling button section 406. Then, the processing proceeds to step S13.

### <Step S13>

When the user operates the inputter 302 to press the registration button 409, the register 308 specifies the reference color based on the designation area 550 designated by the designator 307 and stores (registers) information on the specified reference color to the storage 304. Specifically, for example, the register 308 calculates an average value of the pixel values of pixels included in the designation area 550 and specifies the average value as the reference color.

Then, the setter 303 sets information indicating a predetermined range centered on the reference color registered by the register 308 as a tracking parameter and stores the set tracking parameter to the storage 304. This tracking parameter is set such that the reference color range is defined.

The color registration processing (specification and registration of the reference color) and setting of the tracking parameter are executed by above steps S11 to S13. The above-described flow of the color registration processing illustrated in FIG. 5 serves as an example and specification of the reference color and setting of the tracking parameter may be performed by another method.

### (Overview of Tracking Processing for Tracking Target)

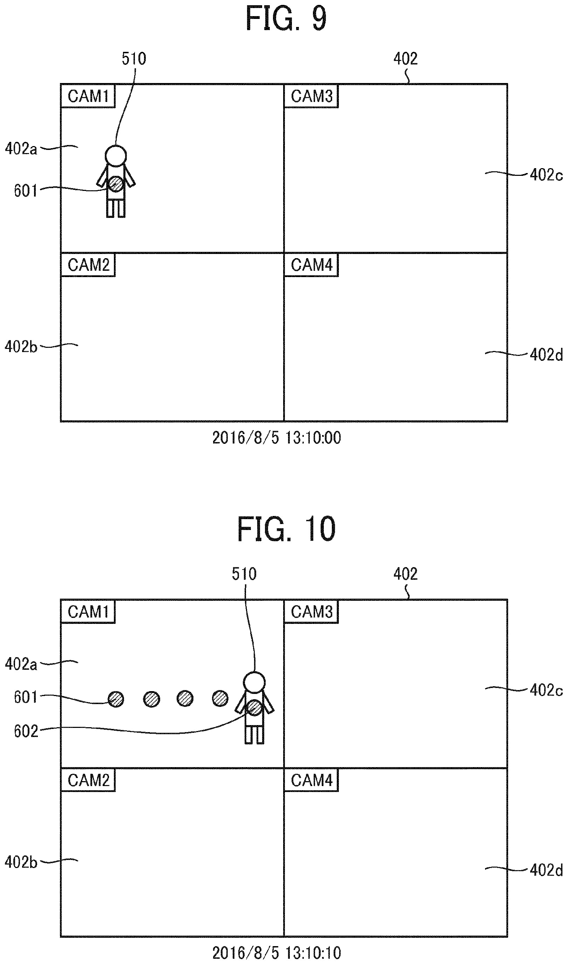

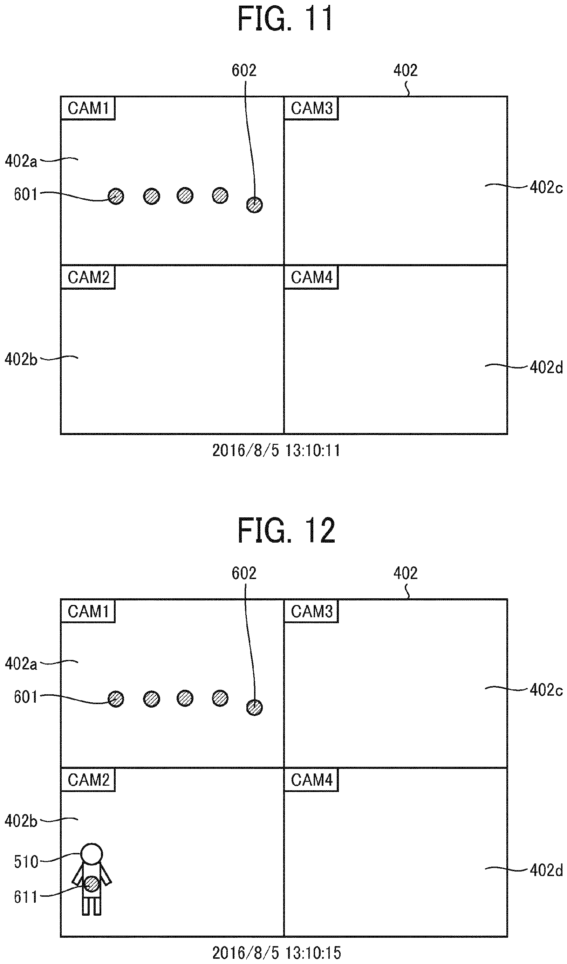

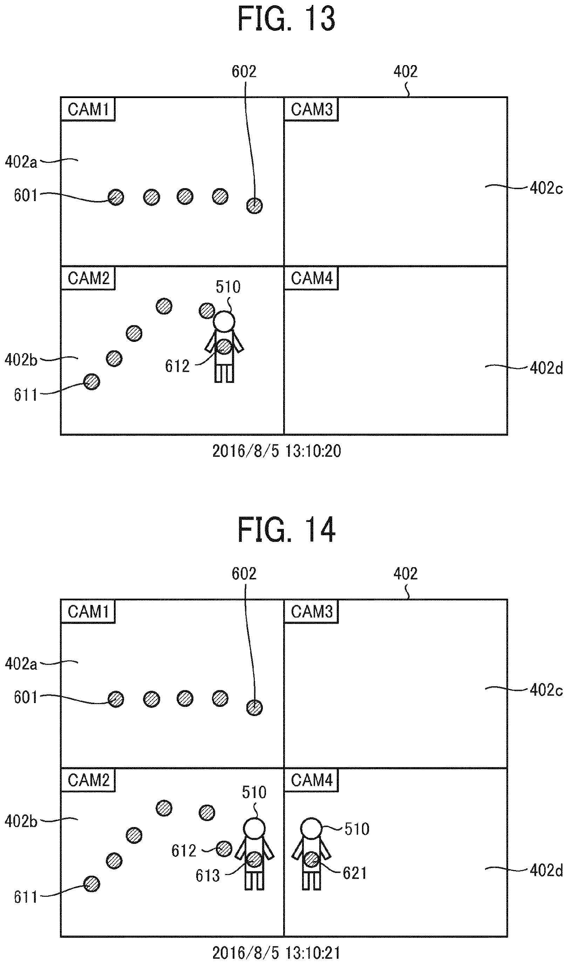

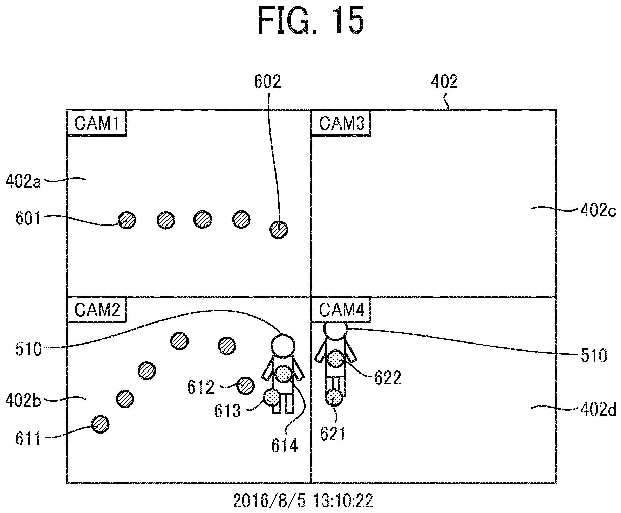

FIG. 8 is a diagram illustrating an example of a state in which all videos of the respective imaging devices are displayed on the tracking screen displayed on the display unit of the information processing apparatus according to the first embodiment. FIG. 9 is a diagram illustrating an example of a case where a tracking target is detected in a frame of a video of a specific imaging device. FIG. 10 is a diagram illustrating a state in which the tracking target detected in the frame of the video of the specific imaging device has moved to an end of the frame. FIG. 11 is a diagram illustrating a state in which the tracking target detected in the frame of the video of the specific imaging device has disappeared from the frame. FIG. 12 is a diagram illustrating a state in which the tracking target that has disappeared from the frame of the video of the specific imaging device is detected in a frame of a video of another imaging device. FIG. 13 is a diagram illustrating a state in which the tracking target detected in the frame of the video of the another imaging device is being tracked. FIG. 14 is a diagram illustrating a state in which the tracking target is detected in a frame of a video of still another imaging device while the tracking target detected in the frame of the video of the another imaging device is being tracked. FIG. 15 is a diagram for explaining a behavior of determining which of tracking targets detected in frames of videos of two imaging devices is to be tracked. The overview of the tracking processing for the tracking target by the information processing apparatus 3 according to the present embodiment will be described with reference to FIGS. 9 to 15.

First, when the user operates the inputter 302 to press the display switching button 412 while the video data of the imaging device 2 selected in the camera selection tab 401a is being displayed on the individual display section 401, the reproducer 305 displays the video data of all the imaging devices 2 (the imaging devices 2a to 2d) on individual display sections 402a to 402d of the whole display section 402, respectively, as illustrated in FIG. 8. In addition, when the user operates the inputter 302 again to press the display switching button 412, the display is switched to the video data displayed on the individual display section 401 illustrated in FIG. 6.

Note that the reference color is assumed to have been registered in advance by the color registration processing described above. Then, when the user operates the inputter 302 to press the tracking start button 410 at a timing when a frame for which the tracking processing for the tracking target is desired is being displayed while the video data is reproduced and displayed by the reproducer 305 on the whole display section 402, the tracking processing for the tracking target is started by the manager 313 from the frame being displayed by the reproducer 305. The video data reproduced and displayed on the respective individual display sections 402a to 402d of the whole display section 402 by the reproducer 305 may be real-time video data received from the imaging device 2 or may be past video data stored in the storage 304.

In addition, description will be made assuming that the trajectory generator 312 superimposes a plot on the tracking target detected by the detector 309 to display.

The whole display section 402 illustrated in FIG. 9 indicates a state in which an outerwear worn by a worker 510 to be tracked (hereinafter simply referred to as "tracking target" in some cases), is detected by the detector 309 at the time "2016/8/5 13:10:00" on the individual display section 402a displaying a frame of video data of the imaging device 2a. As illustrated in FIG. 9, the trajectory generator 312 superimposes a plot 601 on the position of the tracking target detected by the detector 309 to display on the individual display section 402a. The manager 313 associates information on the tracking target detected by the detector 309 with the frame and the imaging device to store to the storage 304. For example, the manager 313 stores, to the storage 304, information in which coordinates of the tracking target, identification information on the imaging device (for example, identification information indicating the imaging device 2a in FIG. 9), a frame number, and time information are associated with each other. Information to be stored by the manager 313 as the information on the tracking target is not limited to the above contents.

FIG. 10 indicates a state in which the detector 309 continues detection (tracking) of the tracking target on the individual display section 402a and detects the tracking target at a position on an end of the individual display section 402a at the time "2016/8/5 13:10:10". As illustrated in FIG. 10, the trajectory generator 312 continues to display plots superimposed on the positions of the tracking target detected by the detector 309 on the individual display section 402a and superimposes a plot 602 on the position of the tracking target detected by the detector 309 at the time "2016/8/5 13:10:10" to display. The manager 313 associates the information on the tracking target detected by the detector 309 with the frame and the imaging device to store to the storage 304 in the same manner as described above.

FIG. 11 indicates a state in which the detector 309 could not detect the tracking target at the time "2016/8/5 13:10:11" on the individual display section 402a, that is, a state in which the tracking target has disappeared. In this case, the manager 313 stores the same coordinates as the coordinates stored at the time "2016/8/5 13:10:10" to the storage 304 as coordinates of the tracking target included in the information on the tracking target. That is, when stored, coordinates detected immediately before the tracking target disappeared are regarded as coordinates at which the tracking target is located after a time point at which the tracking target disappeared.

FIG. 12 indicates a state in which the detector 309 newly detects the tracking target at the time "2016/8/5 13:10:15" on the individual display section 402b displaying a frame of video data of the imaging device 2b. As illustrated in FIG. 12, the trajectory generator 312 superimposes a plot 611 on the position of the tracking target detected by the detector 309 to display on the individual display section 402b. In this case, the manager 313 stores, to the storage 304, information in which coordinates of the tracking target on the individual display section 402b, identification information on the imaging device (for example, identification information indicating the imaging device 2b in FIG. 12), a frame number, and time information are associated with each other. The detector 309 thereafter continues detection (tracking) of the tracking target on the individual display section 402b. That is, coordinates of a position at which the tracking target disappeared from the individual display section 402a are stored until the tracking target is newly detected on the individual display section 402b and, after a time point at which the tracking target is newly detected on the individual display section 402b, coordinates of the position detected on the individual display section 402b are stored. FIG. 13 indicates a state in which the detector 309 continues detection (tracking) of the tracking target on the individual display section 402b and detects the tracking target at a position on an end of the individual display section 402b at the time "2016/8/5 13:10:20". As illustrated in FIG. 13, the trajectory generator 312 continues to display plots superimposed on the positions of the tracking target detected by the detector 309 on the individual display section 402b and superimposes a plot 612 on the position of the tracking target detected by the detector 309 at the time "2016/8/5 13:10:20" to display. The manager 313 associates the information on the tracking target detected by the detector 309 with the frame and the imaging device to store to the storage 304 in the same manner as described above.

FIG. 14 indicates a state in which the detector 309 detects the tracking target on the individual display section 402b at a position on an end of the individual display section 402b at the time "2016/8/5 13:10:21" and at the same time, newly detects the tracking target on the individual display section 402d displaying a frame of video data of the imaging device 2d. As illustrated in FIG. 14, the trajectory generator 312 superimposes a plot 613 on the position of the tracking target detected by the detector 309 to display on the individual display section 402b and superimposes a plot 621 on the position of the tracking target detected by the detector 309 to display on the individual display section 402d at the time "2016/8/5 13:10:21". In this case, the manager 313 associates the information on the tracking target detected by the detector 309 on the individual display section 402b with the frame and the imaging device to store to the storage 304. At this time point, the manager 313 does not store the information on the tracking target detected by the detector 309 on the individual display section 402d to the storage 304. That is, a target in which the detector 309 detects the tracking target is the individual display section 402b at this time point and is not switched to the individual display section 402d.

FIG. 15 indicates a state in which the detector 309 detects the tracking target on the individual display section 402b at a position above the position of the plot 613 and detects the tracking target on the individual display section 402d at a position above the position of the plot 621 at the time "2016/8/5 13:10:22". As illustrated in FIG. 15, the trajectory generator 312 superimposes a plot 614 on the position of the tracking target detected by the detector 309 to display on the individual display section 402b and superimposes a plot 622 on the position of the tracking target detected by the detector 309 to display on the individual display section 402d at the time "2016/8/5 13:10:22". At this time, the calculator 310 calculates a movement amount per unit time (in this case, a time interval between frames) of the tracking target and the area of the tracking target for respective frames of the individual display section 402b and the individual display section 402d and calculates a ratio of the movement amount to the area. Specifically, the calculator 310 first calculates an area A2 of the tracking target located at the plot 614 on the individual display section 402b and an area A4 of the tracking target located at the plot 622 on the individual display section 402d separately. Next, the calculator 310 calculates a movement amount D2 per unit time of the tracking target having moved on the individual display section 402b (a movement amount from the plot 613 to the plot 614) and a movement amount D4 per unit time of the tracking target having moved on the individual display section 402d (a movement amount from the plot 621 to the plot 622) separately. Then, the calculator 310 calculates a ratio of the movement amount D2 to the area A2 (D2/A2) and a ratio of the movement amount D4 to the area A4 (D4/A4).

Then, based on the ratio of the movement amount to the area of the tracking target calculated by the calculator 310 for the frame of each of the individual display section 402b and the individual display section 402d, the determiner 311 determines a frame (imaging device 2) on which the tracking processing for the tracking target is performed. Specifically, the determiner 311 determines the frame of the imaging device corresponding to a larger ratio of the ratio (D2/A2) and the ratio (D4/A4) calculated by the calculator 310 as a frame for the tracking processing for the tracking target. For example, in the example in FIG. 15, when the determiner 311 concludes that the ratio (D4/A4) is larger between the ratio (D2/A2) and the ratio (D4/A4), the determiner 311 determines the frame of the imaging device 2d as a frame for the tracking processing and thereafter, the detector 309 continues detection (tracking) of the tracking target on the individual display section 402d. That is, in a case where the tracking target is detected by the detector 309 in a plurality of frames (in the example in FIG. 15, the frames of the imaging device 2b and the imaging device 2d), tracking of the tracking target is continued in the frame of one of the imaging devices. In this case, the manager 313 associates the information on the tracking target detected by the detector 309 on the individual display section 402d with the frame and the imaging device to store to the storage 304. The determiner 311 may determine a frame (imaging device 2) for the tracking processing for the tracking target based on the movement amount D2 and the movement amount D4 calculated by the calculator 310 or may determine a frame (imaging device 2) for the tracking processing for the tracking target based on the area A2 and the area A4 calculated by the calculator 310.

### (Specific Flow of Tracking Processing for Tracking Target)

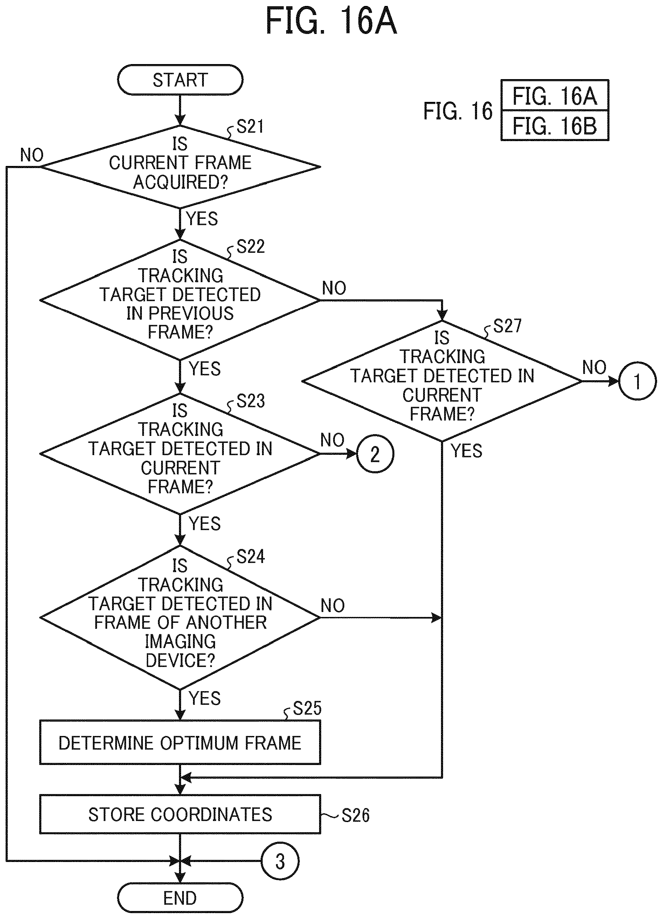

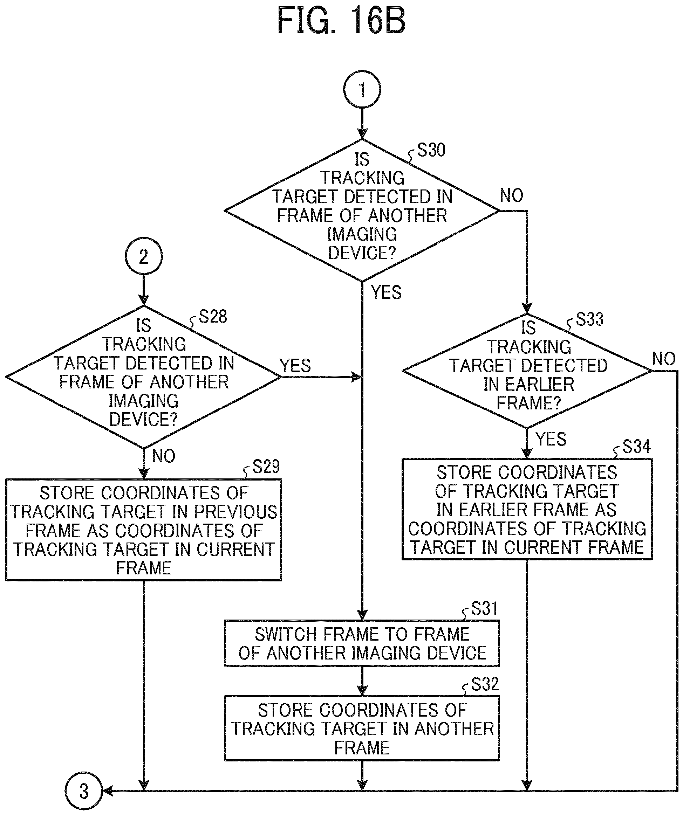

FIGs. 16A and 16B (FIG. 16) are a flowchart illustrating an example of a flow of the tracking processing by the information processing apparatus according to the first embodiment. The flow of the tracking processing for the tracking target by the information processing apparatus 3 according to the present embodiment will be described with reference to FIG. 16. Note that the reference color is assumed to have been registered in advance by the color registration processing described above. Then, when the user operates the inputter 302 to press the tracking start button 410 at a timing when a frame for which the tracking processing for the tracking target is desired is being displayed while the video data is reproduced and displayed by the reproducer 305 on the whole display section 402, the tracking processing for the tracking target is started by the manager 313 from the frame being displayed by the reproducer 305. The video data reproduced and displayed on the respective individual display sections 402a to 402d of the whole display section 402 by the reproducer 305 may be real-time video data received from the imaging device 2 or may be past video data stored in the storage 304.

### <Step S21>

The acquirer 306 acquires a frame (current frame) on which the tracking processing for the tracking target is to be performed from the video data of each of the plurality of imaging devices 2. When the frame can be acquired (step S21: Yes), the processing proceeds to step S22 and, when the frame cannot be acquired (step S21: No), the processing is ended.

### <Step S22>

When the tracking target is detected by the detector 309 in a frame directly before the current frame (hereinafter referred to as "previous frame") (step S22: Yes), the processing proceeds to step S23 and, when the tracking target is not detected (step S22: No), the processing proceeds to step S27.

### <Step S23>

When the tracking target is detected in the current frame corresponding to the previous frame in which the same tracking target has been detected by the detector 309 (step S23: Yes), the processing proceeds to step S24. This case means that the tracking target is detected in both of the previous frame and the current frame. Then, the trajectory generator 312 superimposes a plot on the position of the tracking target detected by the detector 309 to display on the individual display section displaying the current frame (one of the individual display sections 402a to 402d). On the other hand, when the tracking target is not detected (step S23: No), the processing proceeds to step S28. This case means that, since the tracking target has been detected in the previous frame but has not been detected in the current frame, the tracking target has disappeared.

### <Step S24>

When the tracking target is detected by the detector 309 from a frame of video data of another imaging device 2 acquired by the acquirer 306 in step S21 (step S24: Yes), the processing proceeds to step S25. This case means that the tracking target is detected in both of the previous frame and the current frame and the tracking target is also detected in a frame of another imaging device 2 different from the imaging device 2 corresponding to the previous frame and the current frame. On the other hand, when the tracking target is not detected (step S24: No), the processing proceeds to step S26. In this case, since the tracking target has been exclusively detected by the imaging device 2 corresponding to the previous frame and the current frame, a frame on which the tracking processing for the tracking target is to be performed will be naturally kept on the frame of this imaging device 2.

### <Step S25>

The detector 309 has detected the same tracking target in the frames of the two imaging devices 2 at the same timing. Therefore, the calculator 310 calculates the movement amount per unit time (in this case, a time interval between frames) of the tracking target and the area of the tracking target for respective frames of the two imaging devices 2 and calculates a ratio of the movement amount to the area. Then, based on the ratio of the movement amount to the area of the tracking target calculated by the calculator 310 for the frame of each of the two imaging devices 2, the determiner 311 determines an optimum frame (imaging device 2) on which the tracking processing for the tracking target is performed. Then, the processing proceeds to step S26. The determiner 311 may determine the optimum frame (imaging device 2) on which the tracking processing for the tracking target is performed based on the movement amount of the tracking target calculated by the calculator 310 for the frame of each of the two imaging devices 2 or may determine the optimum frame (imaging device 2) on which the tracking processing for the tracking target is performed based on the area of the tracking target calculated by the calculator 310 for the frame of each of the two imaging devices 2.

### <Step S26>

The manager 313 associates the information on the tracking target detected by the detector 309 with the frame and the imaging device 2 on which the tracking processing is currently being performed, to store to the storage 304. For example, the manager 313 stores, to the storage 304, information in which coordinates of the tracking target in the frame on which the tracking processing is currently being performed, identification information identifying the imaging device 2 corresponding to this frame, a frame number assigned to this frame, and time information indicating the time at which the frame is captured, are associated with each other. Such information stored in the storage 304 may be stored in any desired form such as in the form of table. In this case, for example, even when the imaging device 2 on which the tracking processing has been performed up to now is switched to another imaging device 2, the manger 313 stores, in the storage 304, the information on the same tracking target to the same data (for example, the same file). Accordingly, the information can be managed as information indicating results of the tracking processing for the same tracking target by the plurality of imaging devices 2. Then, the tracking processing for the tracking target related to the current frame acquired by the acquirer 306 is ended.

### <Step S27>

When the tracking target is detected in the current frame corresponding to the previous frame in which the tracking target has not been detected by the detector 309 (step S27: Yes), the processing proceeds to step S26. This case means that, since the tracking target has not been detected in the previous frame but is detected in the current frame, the tracking target is newly detected. Then, the trajectory generator 312 superimposes a plot on the position of the tracking target detected by the detector 309 to display on the individual display section displaying the current frame (one of the individual display sections 402a to 402d). In addition, the determiner 311 determines the imaging device 2 corresponding to the current frame as the imaging device 2 on which the tracking processing for the tracking target is performed. On the other hand, when the tracking target is not detected (step S27: No), the processing proceeds to step S30. This case means that the tracking target is not detected in both of the previous frame and the current frame.

### <Step S28>

When the tracking target is detected by the detector 309 from a frame of video data of another imaging device 2 acquired by the acquirer 306 in step S21 (step S28: Yes), the processing proceeds to step S31. This case means that, since the tracking target has been detected in the previous frame but has not been detected in the current frame, the tracking target has disappeared but the tracking target is detected in a frame of another imaging device 2. On the other hand, when the tracking target is not detected (step S28: No), the processing proceeds to step S29. This case means that the tracking target has been detected in the previous frame but has not been detected in the current frame and additionally, the tracking target has not been detected even in a frame of another imaging device 2.

### <Step S29>

The manager 313 stores, as the coordinates of the tracking target included in the information on the tracking target, the same coordinates as the coordinates of the tracking target detected in the previous frame to the storage 304 as the coordinates corresponding to the current frame. That is, when stored, coordinates detected immediately before the tracking target disappeared are regarded as coordinates at which the tracking target is located after a time point at which the tracking target disappeared. As a result, even if the tracking target has disappeared from the frames of all the imaging devices 2, the coordinates detected immediately before the tracking target disappeared is kept stored until the tracking target is again detected in a frame of one of the imaging devices 2. Thus, cooperation between the plurality of imaging devices 2 can be ensured in tracking of the tracking target. Then, the tracking processing for the tracking target related to the current frame acquired by the acquirer 306 is ended.

### <Step S30>

When the tracking target is detected by the detector 309 from a frame of video data of another imaging device 2 acquired by the acquirer 306 in step S21 (step S30: Yes), the processing proceeds to step S31. This case means that the tracking target has not been detected in both of the previous frame and the current frame but the tracking target is detected in a frame of another imaging device 2 different from the imaging device 2 corresponding to the previous frame and the current frame. On the other hand, when the tracking target is not detected (step S30: No), the processing proceeds to step S33. This case means that the tracking target has not been detected in both of the previous frame and the current frame and the tracking target has also not been detected even in a frame of another imaging device 2 different from the imaging device 2 corresponding to the previous frame and the current frame.

### <Step S31>

Since the tracking target has not been detected in the current frame by the detector 309 but the tracking target has been detected in a frame of another imaging device 2 different from the imaging device 2 corresponding to the current frame, the determiner 311 determines the another imaging device 2 as the imaging device 2 on which the tracking processing for the tracking target is performed and switches the imaging device 2 corresponding to the current frame to the another imaging device 2. Then, the processing proceeds to step S32.

### <Step S32>

The manager 313 associates the information on the tracking target detected by the detector 309 with the frame and the imaging device on which the tracking processing is currently being performed, to store to the storage 304. For example, the manager 313 stores, in the storage 304, information in which coordinates of the tracking target in the frame on which the tracking processing is currently being performed, identification information identifying the imaging device corresponding to this frame, a frame number identifying this frame, and time information indicating a time at which the frame is captured, are associated with each other. In this case, for example, even if the imaging device 2 on which the tracking processing has been performed up to now is switched to another imaging device 2, the manager 313 stores, in the storage 304, the information on the same tracking target to the same data (for example, the same file). Accordingly, the information can be managed as information indicating results of the tracking processing for the same tracking target by the plurality of imaging devices 2. Then, the tracking processing for the tracking target related to the current frame acquired by the acquirer 306 is ended.

### <Step S33>

When the tracking target has been detected by the detector 309 in a frame before the previous frame (step S33: Yes), the processing proceeds to step S34. This case means that the tracking target has not been detected in both of the previous frame and the current frame but the tracking target has been detected in a frame before the previous frame. On the other hand, when the tracking target is not detected (step S33: No), the tracking processing for the tracking target related to the current frame acquired by the acquirer 306 is ended. This case means that the tracking target has not been detected in any of the previous frame, the current frame, and a frame before the previous frame and additionally, the tracking target has not been detected even in a frame of another imaging device 2 different from the imaging device 2 corresponding to the previous frame and the current frame.

### <Step S34>

The manager 313 stores, as the coordinates of the tracking target included in the information on the tracking target, the same coordinates as the coordinates of the tracking target detected in the frame before the previous frame to the storage 304 as the coordinates corresponding to the current frame. That is, when stored, coordinates detected immediately before the tracking target disappeared are regarded as coordinates at which the tracking target is located after a time point at which the tracking target disappeared. As a result, even if the tracking target has disappeared from the frames of all the imaging devices 2, the coordinates detected immediately before the tracking target disappeared is kept stored until the tracking target is again detected in a frame of one of the imaging devices 2 and thus, cooperation between the plurality of imaging devices 2 can be ensured in tracking of the tracking target. Then, the tracking processing for the tracking target related to the current frame acquired by the acquirer 306 is ended.

The processing in steps S21 to S34 described thus far is repeated such that the tracking processing for the tracking target is performed. The flowchart illustrated in FIG. 16 indicates an example of the flow of the tracking processing for the tracking target and any flow may be employed as long as processing has the action and effect of the tracking processing described above.

As described thus far, the information processing apparatus 3 according to the present embodiment detects and tracks a tracking target based on the feature information registered in advance in frames of video data captured by the plurality of imaging devices 2 and, when the tracking target tracked in a frame of one imaging device 2 is also detected in a frame of another imaging device 2, determines one imaging device 2 from the two imaging devices 2 based on the state of the detected tracking target as an imaging device on which the tracking processing is to be performed. As a result, when a tracking target is tracked by a plurality of imaging devices, the tracking target can be tracked across the imaging devices.

In addition, when stored, coordinates detected immediately before the tracking target disappeared are regarded as coordinates at which the tracking target is located after a time point at which the tracking target disappeared from the frames of all the imaging devices 2. As a result, even if the tracking target has disappeared from the frames of all the imaging devices 2, the storage of the coordinates detected immediately before the tracking target disappeared is maintained until the tracking target is again detected in a frame of one of the imaging devices 2 and thus, cooperation between the plurality of imaging devices 2 can be ensured in tracking of the tracking target.

Furthermore, when the tracking target is detected in frames of two or more imaging devices, the determiner 311 of the information processing apparatus 3 according to the present embodiment determines a frame (imaging device 2) on which the tracking processing for the tracking target is performed, based on the ratio of the movement amount to the area of the tracking target calculated by the calculator 310 for each frame. Specifically, the determiner 311 determines a frame corresponding to the largest ratio among the ratios calculated by the calculator 310 as a frame for the tracking processing for the tracking target. As a result, since a frame in which the movement amount of the tracking target appearing in the frame is long and the movement amount is expected to be further extended due to a small area of the tracking target is determined as the frame for the tracking processing, the quantity of information on the flow line is increased and thus, the analysis accuracy of the flow line of the tracking target can be improved.

Even when the imaging device 2 on which the tracking processing has been performed up to now is switched to another imaging device 2 by the determiner 311, the manager 313 stores, in the storage 304, the information on the same tracking target to the same data (for example, the same file). As a result, the information can be managed as information indicating results of the tracking processing for the same tracking target by the plurality of imaging devices 2.

As described above, when the same detection target is detected by the detector 309 in frames of two imaging devices 2, the determiner 311 determines an optimum frame (imaging device 2) on which the tracking processing for the tracking target is performed by a predetermined method, but the determiner 311 is not limited to this configuration. For example, an imaging device 2 corresponding to a frame in which the tracking target is first detected is prioritized so as to be assigned as a target on which the tracking processing is to be performed and, when the tracking target has disappeared from the frame of this imaging device 2, the target on which the tracking processing is to be performed may be switched to another imaging device 2. As a result, once the tracking target is detected in a frame, the imaging device 2 with this frame is not switched to another imaging device 2 until the tracking target disappears from the frame. Therefore, in the analysis of the flow line of the tracking target, it is possible to recognize an overall flow line and also suppress the frequency of switching of the imaging device 2 on which the tracking processing is to be performed.

Furthermore, although the present embodiment has described a behavior in a case where the tracking target is detected in frames of two imaging devices 2 at the same timing, the determiner 311 can determine a frame (imaging device 2) on which the tracking processing is to be performed by the same method also in a case where the tracking target is detected in frames of three or more imaging devices 2 at the same timing.

### [Second Embodiment]

An information processing apparatus according to a second embodiment will be described focusing on differences from the information processing apparatus 3 according to the first embodiment. In the information processing apparatus according to the second embodiment, a predetermined area is provided in an outer peripheral portion of the display area for displaying a frame and description will be made on a behavior of processing that branches depending on whether the tracking target was present in this predetermined area immediately before disappearing. Note that the configuration of an image processing system, the hardware configuration of the information processing apparatus, and the operation of the color registration according to the present embodiment are the same as the respective configurations and behavior described in the above first embodiment.

### (Block Configuration of Information Processing Apparatus)

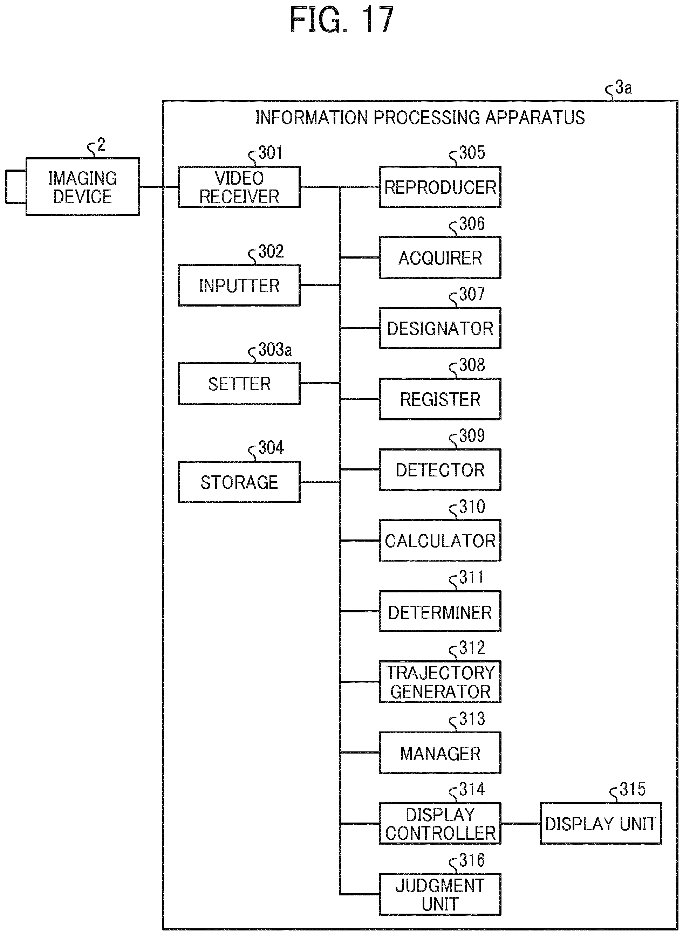

FIG. 17 is a diagram illustrating an example of a configuration of functional blocks of the information processing apparatus according to the second embodiment. A block configuration of the information processing apparatus 3a will be described with reference to FIG. 17.

As illustrated in FIG. 17, the information processing apparatus 3a includes a video receiver 301, an inputter 302, a setter 303a, a storage 304, a reproducer 305, an acquirer 306, a designator 307, a register 308, a detector 309, a calculator 310, a determiner 311, a trajectory generator 312 (trajectory display unit), a manager 313, a display controller 314, a display unit 315, and a judgment unit 316. In the present embodiment, the functions of the video receiver 301, the inputter 302, the storage 304, the reproducer 305, the acquirer 306, the designator 307, the register 308, the detector 309, the calculator 310, the determiner 311, the trajectory generator 312, the manager 313, the display controller 314, and the display unit 315 are the same as the respective functions described in the first embodiment. In order to simplify the explanation, description will be made with illustration of a hub 4 omitted in FIG. 17.

The setter 303a is a functional unit configured to set various types of setting information in accordance with an operation signal from the inputter 302 operated by a user to store to the storage 304. For example, the setter 303a sets information (tracking parameter) indicating a predetermined range centered on a reference color registered by the register 308 as described later, a width of a catch window to be described later, and the like and stores the set tracking parameter and width information to the storage 304. The setter 303a is implemented by a program executed by the CPU 101 illustrated in FIG. 3.

The judgment unit 316 is a functional unit configured to judge, when the tracking target has disappeared from the frame, whether coordinates of the tracking target detected immediately before disappearance are present within the catch window. The judgment unit 316 is implemented by a program executed by the CPU 101 illustrated in FIG. 3.

All or part of the video receiver 301, the setter 303a, the reproducer 305, the acquirer 306, the designator 307, the register 308, the detector 309, the calculator 310, the determiner 311, the trajectory generator 312, the manager 313, the display controller 314, and the judgment unit 316 illustrated in FIG. 17 may be implemented by a hardware circuit such as an ASIC or an FPGA instead of a program as software.

In addition, each functional unit illustrated in FIG. 17 conceptually indicates the function and is not limited to such a configuration. For example, a plurality of functional units illustrated as independent functional units in FIG. 17 may be configured as one functional unit. On the other hand, a function of one functional unit in FIG. 17 may be divided into a plurality of functions so as to be configured as a plurality of functional units.

### (Overview of Tracking Processing for Tracking Target)

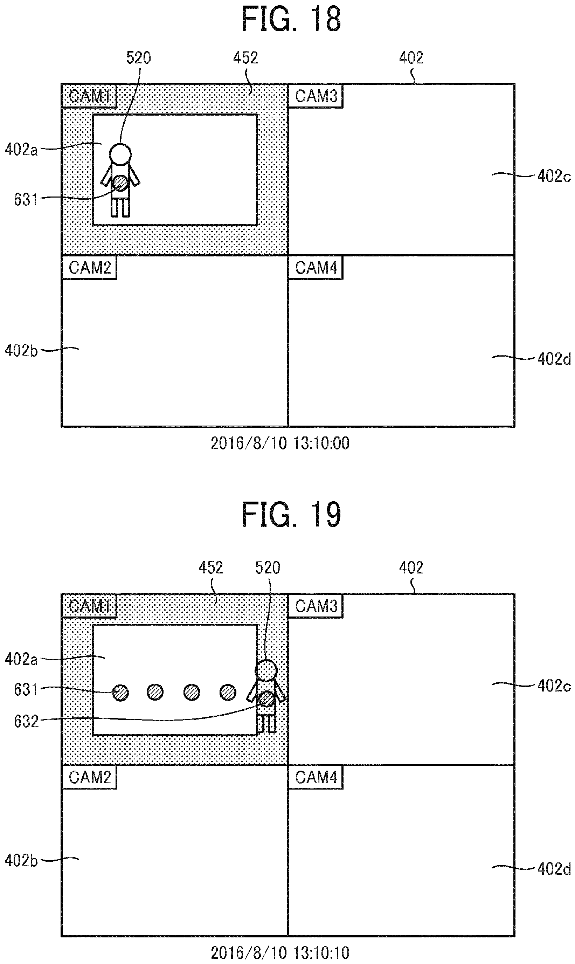

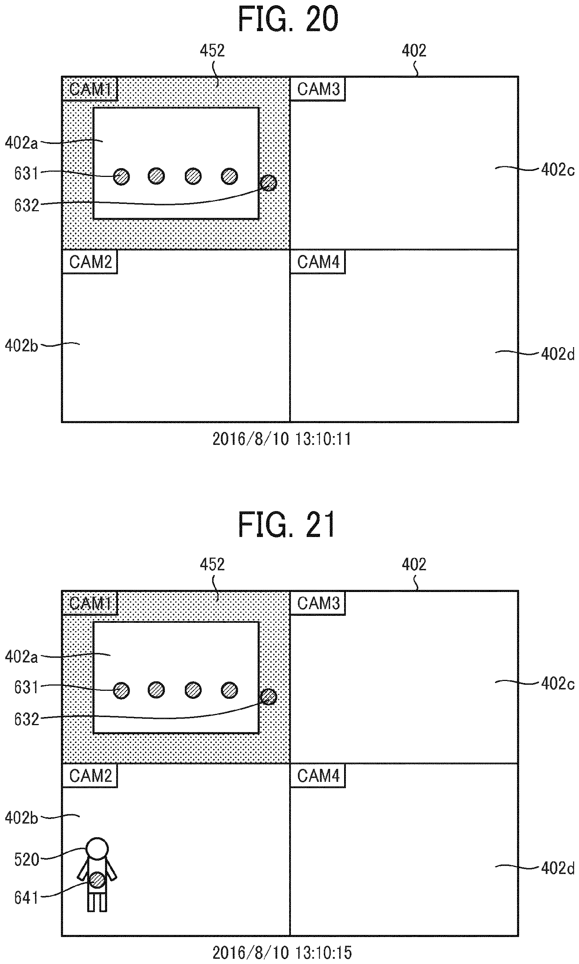

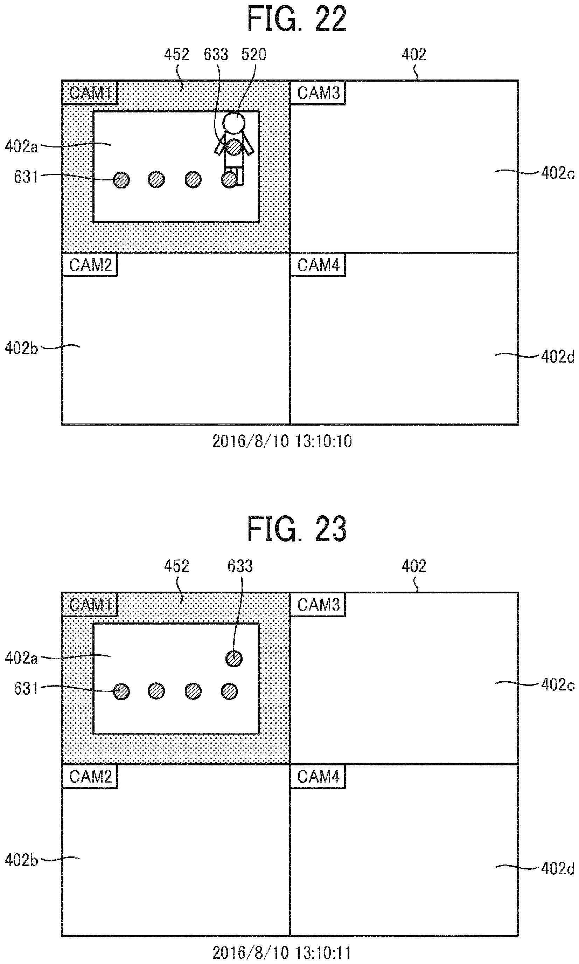

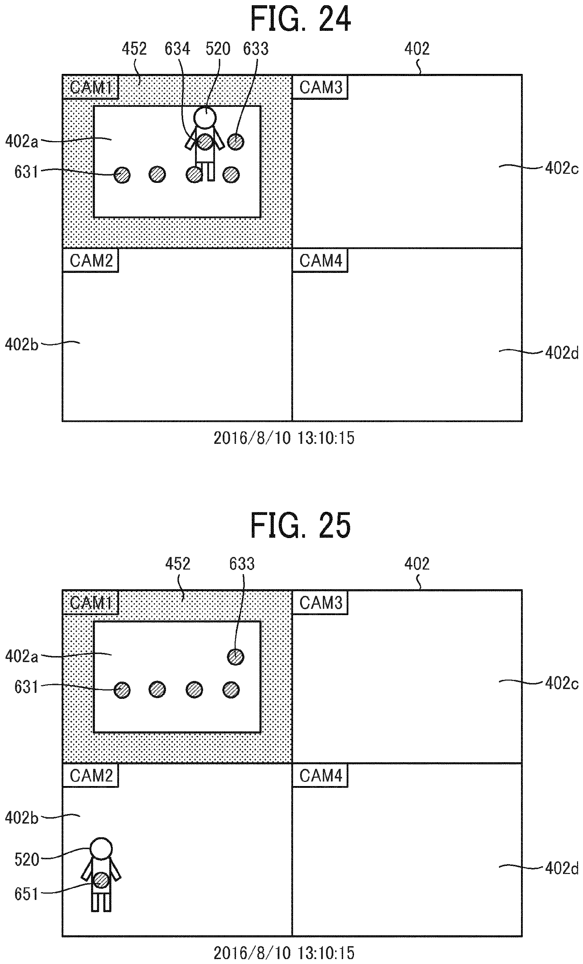

FIG. 18 is a diagram illustrating an example of a case where a tracking target is detected in a frame of a video of a specific imaging device. FIG. 19 is a diagram illustrating a state in which the tracking target detected in the frame of the video of the specific imaging device has moved to a catch window. FIG. 20 is a diagram illustrating a state in which the tracking target detected in the frame of the video of the specific imaging device has disappeared from the catch window. FIG. 21 is a diagram illustrating a state in which the tracking target that has disappeared from the catch window of the frame of the video of the specific imaging device is detected in a frame of a video of another imaging device. FIG. 22 is a diagram illustrating a state in which the tracking target detected in the frame of the video of the specific imaging device has moved to a point before reaching the catch window. FIG. 23 is a diagram illustrating a state in which the tracking target detected in the frame of the video of the specific imaging device has disappeared at a point before reaching the catch window. FIG. 24 is a diagram illustrating a state in which the tracking target that has disappeared outside of the catch window of the frame of the video of the specific imaging device is again detected in the frame of the same imaging device. FIG. 25 is a diagram illustrating a state in which the tracking target that has disappeared outside of the catch window of the frame of the video of the specific imaging device is detected in a frame of a video of another imaging device. The overview of the tracking processing for the tracking target by the information processing apparatus 3a according to the present embodiment will be described with reference to FIGS. 18 to 25.

First, when the user operates the inputter 302 to press a display switching button 412 while the video data of the imaging device 2 selected in a camera selection tab 401a is being displayed on an individual display section 401, the reproducer 305 displays the video data of all the imaging devices 2 (imaging devices 2a to 2d) on individual display sections 402a to 402d of a whole display section 402, respectively, as illustrated in FIG. 8 described above. In addition, when the user operates the inputter 302 again to press the display switching button 412, the display is switched to the video data displayed on the individual display section 401 illustrated in FIG. 6.

Note that the reference color is assumed to have been registered in advance by the color registration processing described above. Then, when the user operates the inputter 302 to press a tracking start button 410 at a timing when a frame for which the tracking processing for the tracking target is desired is being displayed while the video data is reproduced and displayed by the reproducer 305 on the whole display section 402, the tracking processing for the tracking target is started by the manager 313 from the frame being displayed by the reproducer 305. The video data reproduced and displayed on the respective individual display sections 402a to 402d of the whole display section 402 by the reproducer 305 may be real-time video data received from the imaging device 2 or may be past video data stored in the storage 304.

In addition, description will be made assuming that the trajectory generator 312 superimposes a plot on the tracking target detected by the detector 309 to display. As illustrated in FIG. 18, the predetermined area called a catch window 452 is assumed to be set on the individual display section 402a in an outer peripheral portion of the display area of the individual display section 402a. However, the catch window is assumed to be set not only in the individual display section 402a but also in each of the individual display sections 402b to 402d. Although the function of this catch window will be described later, setting of the width of the catch window can be changed arbitrarily by the setter 303a as described above. For example, when the movement amount per unit time of the tracking target in the frame is large, the width of the catch window can be set wider.

The whole display section 402 illustrated in FIG. 18 indicates a state in which an outerwear worn by a worker 520 to be tracked (tracking target) is detected by the detector 309 at the time "2016/8/10 13:10:00" on the individual display section 402a displaying a frame of video data of the imaging device 2a. As illustrated in FIG. 18, the trajectory generator 312 superimposes a plot 631 on the position of the tracking target detected by the detector 309 to display on the individual display section 402a. The manager 313 associates information on the tracking target detected by the detector 309 with the frame and the imaging device 2 to store to the storage 304. For example, the manager 313 stores, to the storage 304, information in which coordinates of the tracking target, identification information on the imaging device (for example, identification information indicating the imaging device 2a in FIG. 18), a frame number, and time information are associated with each other. Information to be stored by the manager 313 as the information on the tracking target is not limited to the above contents.

FIG. 19 indicates a state in which the detector 309 continues detection (tracking) of the tracking target on the individual display section 402a and detects the tracking target at a position on an end of the individual display section 402a at the time "2016/8/10 13:10:10". As illustrated in FIG. 19, the trajectory generator 312 continues to display plots superimposed on the positions of the tracking target detected by the detector 309 on the individual display section 402a and superimposes a plot 632 on the position of the tracking target detected by the detector 309 at the time "2016/8/10 13:10:10" to display. The manager 313 associates the information on the tracking target detected by the detector 309 with the frame and the imaging device to store to the storage 304 in the same manner as described above.

FIG. 20 indicates a state in which the detector 309 could not detect the tracking target at the time "2016/8/10 13:10:11" on the individual display section 402a, that is, a state in which the tracking target has disappeared. In this case, the judgment unit 316 judges whether coordinates of the tracking target (coordinates of the plot 632) detected immediately before the tracking target disappeared are located within the catch window 452 and, in the example in FIG. 20, judges that the coordinates of the plot 632 are located within the catch window 452. In this case, the manager 313 concludes that the tracking target has exited from the individual display section 402a and does not store the coordinates of the tracking target to the storage 304 until the tracking target is again detected by the detector 309 in a frame of one of the imaging devices 2. As described above, by using the catch window 452 set in the outer peripheral portion of the individual display section 402a, it is possible to conclude whether the disappearance of the tracking target has occurred at an end portion of the individual display section 402a, thereby being able to improve the accuracy of conclusion as to whether the tracking target has actually exited from the individual display section 402a.

FIG. 21 indicates a state in which the detector 309 newly detects the tracking target at the time "2016/8/10 13:10:15" on the individual display section 402b displaying a frame of video data of the imaging device 2b. As illustrated in FIG. 21, the trajectory generator 312 superimposes a plot 641 on the position of the tracking target detected by the detector 309 to display on the individual display section 402b. In this case, the manager 313 stores, to the storage 304, information in which coordinates of the tracking target on the individual display section 402b, identification information on the imaging device (for example, identification information indicating the imaging device 2b in FIG. 21), a frame number, and time information are associated with each other. The detector 309 thereafter continues detection (tracking) of the tracking target on the individual display section 402b. That is, coordinates of the position of the tracking target are not stored until the tracking target is newly detected on the individual display section 402b after disappearing from the individual display section 402a and, after a time point at which the tracking target is newly detected on the individual display section 402b, the storage of the coordinates of the position detected on the individual display section 402b is started.

FIG. 22 indicates a state in which the detector 309 continues detection (tracking) of the tracking target on the individual display section 402a from the state in FIG. 18 and detects the tracking target up to a specific position on the individual display section 402a at the time "2016/8/10 13:10:10". As illustrated in FIG. 22, the trajectory generator 312 continues to display plots superimposed on the positions of the tracking target detected by the detector 309 on the individual display section 402a and superimposes a plot 633 on the position of the tracking target detected by the detector 309 at the time "2016/8/10 13:10:10" to display. The manager 313 associates the information on the tracking target detected by the detector 309 with the frame and the imaging device to store to the storage 304 in the same manner as described above.

FIG. 23 indicates a state in which the detector 309 could not detect the tracking target at the time "2016/8/10 13:10:11" on the individual display section 402a, that is, a state in which the tracking target has disappeared. In this case, the judgment unit 316 judges whether coordinates of the tracking target (coordinates of the plot 633) detected immediately before the tracking target disappeared are located within the catch window 452 and, in the example in FIG. 23, judges that the coordinates of the plot 633 are located outside of the catch window 452 (that is, on an inner side of the catch window 452). In this case, the manager 313 concludes that the tracking target is still present within the individual display section 402a and, until the tracking target is again detected by the detector 309 in a frame of one of the imaging devices 2, stores the same coordinates as the coordinates stored at the time "2016/8/10 13:10:10" to the storage 304 as the coordinates of the tracking target included in the information on the tracking target. That is, when stored, coordinates detected immediately before the tracking target disappeared are regarded as coordinates at which the tracking target is located after a time point at which the tracking target disappeared. As described above, by using the catch window 452 set in the outer peripheral portion of the individual display section 402a, it is possible to conclude whether the disappearance of the tracking target has occurred at an inward portion of the individual display section 402a, thereby being able to improve the accuracy of conclusion that, for example, the tracking target has been hidden behind an object within the individual display section 402a and disappeared.

FIG. 24 indicates a state in which the detector 309 again detects the tracking target at the time "2016/8/10 13:10:15" on the individual display section 402a. As illustrated in FIG. 24, the trajectory generator 312 superimposes a plot 634 on the position of the tracking target detected by the detector 309 to display on the individual display section 402a. The manager 313 associates the information on the tracking target detected by the detector 309 with the frame and the imaging device to store to the storage 304 in the same manner as described above. That is, coordinates of the position of the tracking target that has disappeared from the individual display section 402a are not stored until the tracking target is newly detected on the individual display section 402a and, after a time point at which the tracking target is again detected on the individual display section 402a, the storage of the coordinates of the position detected on the individual display section 402a is resumed.

FIG. 25 indicates a state in which the detector 309 newly detects the tracking target at the time "2016/8/10 13:10:15" on the individual display section 402b displaying a frame of video data of the imaging device 2b from the state in FIG. 23. As illustrated in FIG. 25, the trajectory generator 312 superimposes a plot 651 on the position of the tracking target detected by the detector 309 to display on the individual display section 402b. In this case, the manager 313 stores, to the storage 304, information in which coordinates of the tracking target on the individual display section 402b, identification information on the imaging device (for example, identification information indicating the imaging device 2b in FIG. 25), a frame number, and time information are associated with each other. The detector 309 thereafter continues detection (tracking) of the tracking target on the individual display section 402b. That is, coordinates of the position of the tracking target immediately before disappearance are maintained until the tracking target is newly detected on the individual display section 402b after disappearing from the individual display section 402a and, after a time point at which the tracking target is newly detected on the individual display section 402b, the storage of the coordinates of the position detected on the individual display section 402b is started.

The behavior as to which frame (imaging device 2) is to be determined as a target on which the tracking processing is to be performed when the tracking target is detected in a plurality of frames among the frames of the individual display sections 402a to 402d is the same as the determining behavior of the determiner 311 described in the first embodiment.

### (Specific Flow of Tracking Processing for Tracking Target)

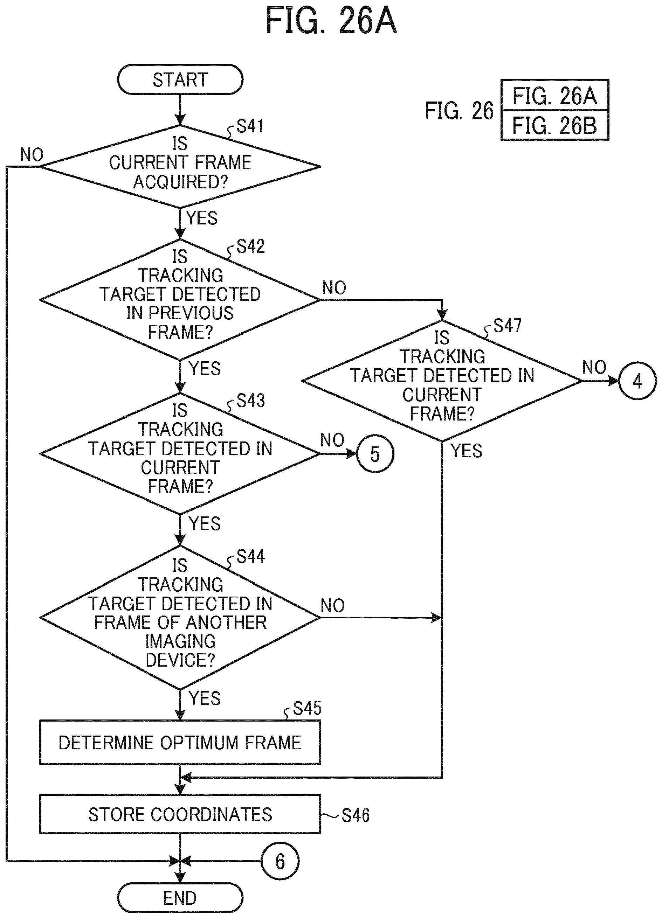

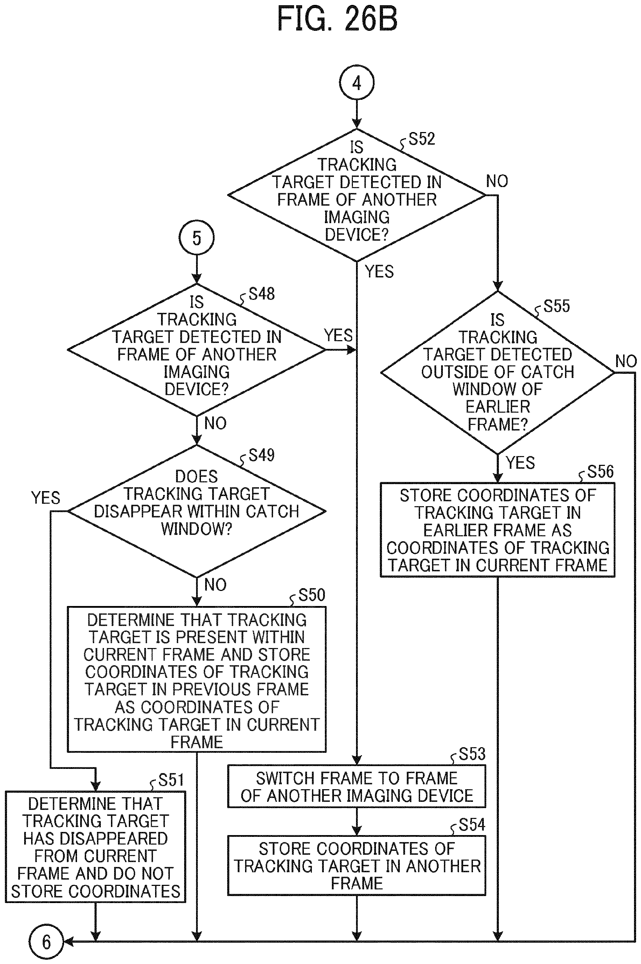

FIG. 26 is a flowchart illustrating an example of a flow of the tracking processing by the information processing apparatus according to the second embodiment. The flow of the tracking processing for the tracking target by the information processing apparatus 3a according to the present embodiment will be described with reference to FIG. 26. Note that the reference color is assumed to have been registered in advance by the color registration processing described above. Then, when the user operates the inputter 302 to press the tracking start button 410 at a timing when a frame for which the tracking processing for the tracking target is desired is being displayed while the video data is reproduced and displayed by the reproducer 305 on the whole display section 402, the tracking processing for the tracking target is started by the manager 313 from the frame being displayed by the reproducer 305. The video data reproduced and displayed on the respective individual display sections 402a to 402d of the whole display section 402 by the reproducer 305 may be real-time video data received from the imaging device 2 or may be past video data stored in the storage 304.

### <Steps S41 to S47>

The processing in steps S41 to S47 is the same as the processing in steps S21 to S27 illustrated in FIG. 16 of the first embodiment, respectively. However, when the same tracking target is not detected in the current frame corresponding to the previous frame in which the tracking target has been detected by the detector 309 in step S43 (step S43: No), the processing proceeds to step S48. This case means that, since the tracking target has been detected in the previous frame but has not been detected in the current frame, the tracking target has disappeared. In addition, when the tracking target is not detected in the current frame corresponding to the previous frame in which the tracking target has not been detected by the detector 309 in step S47 (step S47: No), the processing proceeds to step S52. This case means that the tracking target is not detected in both of the previous frame and the current frame.

### <Step S48>

When the tracking target is detected by the detector 309 from a frame of video data of another imaging device 2 acquired by the acquirer 306 in step S41 (step S48: Yes), the processing proceeds to step S53. This case means that, since the tracking target has been detected in the previous frame but has not been detected in the current frame, the tracking target has disappeared but the tracking target is detected in a frame of another imaging device 2. On the other hand, when the tracking target is not detected (step S48: No), the processing proceeds to step S49. This case means that the tracking target has been detected in the previous frame but has not been detected in the current frame (disappeared) and additionally, the tracking target has not been detected even in a frame of another imaging device 2.

### <Step S49>

The judgment unit 316 judges whether coordinates of the tracking target detected immediately before the tracking target disappeared are located within the catch window set in the frame from which the tracking target has disappeared. When the coordinates of the tracking target are located within the catch window, that is, when the tracking target has disappeared within the catch window (step S49: Yes), the processing proceeds to step S51. On the other hand, when the coordinates of the tracking target are not located within the catch window, that is, when the tracking target has disappeared outside of the catch window (on an inner side of the catch window) (step S49: No), the processing proceeds to step S50.

### <Step S50>

The manager 313 concludes that the tracking target is present within the current frame and stores, as the coordinates of the tracking target included in the information on the tracking target, the same coordinates as the coordinates of the tracking target detected in the previous frame to the storage 304 as the coordinates corresponding to the current frame. That is, the tracking target is concluded to be present within the current frame and, when stored, coordinates detected immediately before the tracking target disappeared are regarded as coordinates at which the tracking target is located after a time point at which the tracking target disappeared. As a result, even if the tracking target has disappeared from the frames of all the imaging devices 2, the coordinates detected immediately before the tracking target disappeared is kept stored until the tracking target is again detected in a frame of one of the imaging devices 2 and thus, cooperation between the plurality of imaging devices 2 can be ensured in tracking of the tracking target. In addition, according to disappearance outside of the catch window (on an inner side of the catch window) of the current frame, it is possible to improve the accuracy of conclusion that, for example, the tracking target has been hidden behind an object within the current frame and disappeared. Then, the tracking processing for the tracking target related to the current frame acquired by the acquirer 306 is ended.

### <Step S51>

The manager 313 concludes that the tracking target has exited from the current frame and does not store the information on the tracking target (e.g., coordinates) to the storage 304. As described above, by using the catch window set in the outer peripheral portion of the individual display section (the individual display sections 402a to 402d), it is possible to conclude whether the disappearance of the tracking target has occurred at an end portion of the individual display section, thereby being able to improve the accuracy of conclusion as to whether the tracking target has actually exited from the individual display section (in this case, the current frame). Then, the tracking processing for the tracking target related to the current frame acquired by the acquirer 306 is ended.

### <Steps S52 to S54>

The processing in steps S52 to S54 is the same as the processing in steps S30 to S32 illustrated in FIG. 16 of the first embodiment, respectively.

### <Step S55>

When the tracking target has been detected outside of the catch window of a frame before the previous frame by the detector 309 (step S55: Yes), the processing proceeds to step S56. This case means that the tracking target has not been detected in both of the previous frame and the current frame but the tracking target has been detected outside of the catch window of a frame before the previous frame. On the other hand, when the tracking target is not detected (step S55: No), the tracking processing for the tracking target related to the current frame acquired by the acquirer 306 is ended. This case means that the tracking target has not been detected in either the previous frame and the current frame, the tracking target has not been detected at least within the catch window of the frame before the previous frame, and additionally, the tracking target has not been detected even in a frame of another imaging device 2 different from the imaging device 2 corresponding to the previous frame and the current frame.

### <Step S56>

The manager 313 stores, as the coordinates of the tracking target included in the information on the tracking target, the same coordinates as the coordinates of the tracking target detected outside of the catch window of the frame before the previous frame to the storage 304 as the coordinates corresponding to the current frame. That is, when stored, coordinates detected immediately before the tracking target disappeared are regarded as coordinates at which the tracking target is located after a time point at which the tracking target disappeared. As a result, even if the tracking target has disappeared from the frames of all the imaging devices 2, the storage of the coordinates detected immediately before the tracking target disappeared is maintained until the tracking target is again detected in a frame of one of the imaging devices 2 and thus, cooperation between the plurality of imaging devices 2 can be ensured in tracking of the tracking target. Then, the tracking processing for the tracking target related to the current frame acquired by the acquirer 306 is ended.

The processing in steps S41 to S56 described thus far is repeated such that the tracking processing for the tracking target is performed. The flowchart illustrated in FIG. 26 indicates an example of the flow of the tracking processing for the tracking target and any flow may be employed as long as processing has the action and effect of the tracking processing described above.

As described thus far, the information processing apparatus 3a according to the present embodiment achieves the same effect as the effect of the information processing apparatus 3 according to the first embodiment and additionally sets the catch window in the outer peripheral portion of the display area (in the above example, each of the individual display sections 402a to 402d) of the frame. As a result, when the tracking target has disappeared within the catch window, the tracking target can be regarded as having exited from the frame and, when the tracking target has disappeared outside of the catch window (on an inner side of the catch window), the tracking target can be regarded as being present within the frame. Therefore, when it is desired to accurately recognize and analyze the flow line of the tracking target not appearing in frames of the plurality of imaging devices 2, accurate conclusion on whether the tracking target has exited from the frame can be obtained.

When at least one of the functional units of the setter 303 (303a), the reproducer 305, the acquirer 306, the designator 307, the register 308, the detector 309, the calculator 310, the determiner 311, the trajectory generator 312, the manager 313, the display controller 314, and the judgment unit 316 according to each embodiment is implemented by execution of a program, the program is provided by being incorporated in advance in a ROM or the like. A program executed by the information processing apparatus 3 (3a) of each embodiment may be configured so as to be provided by being recorded in a computer-readable recording medium, such as a compact disk read only memory (CD-ROM), a flexible disk (FD), a compact disk recordable (CD-R), and a DVD, as a file in an installable format or executable format. The program executed by the information processing apparatus 3 (3a) of each embodiment may be configured so as to be saved and kept on a computer connected to a network such as the Internet and provided by being downloaded by way of the network. The program executed by the information processing apparatus 3 (3a) of each embodiment may be configured so as to be provided or distributed by way of a network such as the Internet. In addition, the program executed by the information processing apparatus 3 (3a) of each embodiment has a module configuration including at least one of the above-described functional units and, as actual hardware, the CPU reads the program from the above-described ROM to execute, whereby each of the above-described units is loaded on a main storage device and is generated.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An image processing apparatus comprising:
an acquirer (306) configured to acquire a plurality of frames of video data respectively captured by a plurality of imaging devices;
a detector (309) configured to detect a tracking target in any one of the frames acquired by the acquirer (306);
a determiner (311) configured to determine, when the detector (309) detects the tracking target from two or more frames captured by two or more imaging devices among the plurality of imaging devices, one of the two or more imaging devices as a target on which tracking processing for the tracking target is to be performed; and
a manager (313) configured to store, to a storage device, position information on the tracking target detected by the detector (309) in the frame captured by the imaging device on which the tracking processing is being performed,
wherein when the detector (309) detects that the tracking target has disappeared from an outer peripheral portion of an area imaged by the imaging device on which the tracking processing is being performed, the manager (313) is configured to:
stop storing position information on the tracking target in the frame to the storage device, and
store information on a position at which the tracking target has disappeared to the storage device as position information on the tracking target in the frame until a time point after the tracking target is newly detected on one of the plurality of imaging devices.

2. The image processing apparatus according to claim 1, wherein
the determiner (311) determines one of the two or more imaging devices as a target on which the tracking processing is to be performed, based on at least one of an area and a movement amount of the tracking target between respective frames in which the tracking target has been detected by the detector (309).

3. The image processing apparatus according to claim 2, wherein
the determiner (311) determines one of the two or more imaging devices as a target on which the tracking processing is to be performed, based on a ratio of the movement amount to the area of the tracking target.

4. The image processing apparatus according to claim 1, wherein
the determiner (311) determines, as a target on which the tracking processing is to be performed, an imaging device in which the tracking target is first detected in the frame by the detector (309), from among the two or more imaging devices.

5. The image processing apparatus according to claim 1, wherein
when the tracking target has not been detected by the detector (309) in a first frame captured by the imaging device on which the tracking processing is being performed, the manager (313) stores, to the storage device, position information on the tracking target in a second frame before the first frame and in which the tracking target has been detected, as position information on the tracking target in the first frame.

6. The image processing apparatus according to any one of claims 1 to 5, wherein
even when an imaging device on which the tracking processing is to be performed is switched by the determiner (311) among the plurality of imaging devices, the manager (313) stores position information on the same tracking target to the storage device as the same data file.

7. The image processing apparatus according to any one of claims 1 to 6, further comprising:
a reproducer (305) configured to reproduce and display the video data captured by each of the plurality of imaging devices in a display area of a display; and
a trajectory display unit (312) configured to superimpose, on the video data that is captured by the imaging device on which the tracking processing is being performed and is reproduced and displayed by the reproducer (305), a trajectory of the tracking target detected by the detector (309) in the frame of the video data for display.

8. The image processing apparatus according to any one of claims 1 to 7, wherein
the detector (309) detects the tracking target based on feature information about the tracking target registered in advance.

9. The image processing apparatus according to claim 8, wherein the feature information includes at least one of a color of the tracking target and a shape of the tracking target.

10. The image processing apparatus according to claim 8 or 9, further comprising:
a designator (307) configured to designate a designation area for prescribing the feature information about the tracking target in the frame; and
a register (308) configured to register the feature information based on the designation area.

11. A computer implemented image processing method comprising:
acquiring (S11) a plurality of frames of video data respectively captured by a plurality of imaging devices;
detecting a tracking target in any one of the acquired frame;
determining (S25, S45), when the detecting detects the tracking target from two or more frames captured by two or more imaging devices among the plurality of imaging devices, one of the two or more imaging devices as a target on which tracking processing for the tracking target is to be performed;
detecting that the tracking target has disappeared from an outer peripheral portion of an area imaged by the imaging device on which the tracking processing is being performed;
stop storing position information on the tracking target in the frame to the storage device, and
storing information on a position at which the tracking target has disappeared to the storage device as position information on the tracking target in the frame until a time point after the tracking target is newly detected on one of the plurality of imaging devices.

12. A carrier means (102, 103, 104, 110) carrying computer readable code for controlling a computer (3) to carry out the computer implemented method of claim 11.

## Patentansprüche

1. Bildverarbeitungsvorrichtung, umfassend:
einen Erfasser (306), welcher konfiguriert ist, um eine Vielzahl von Rahmen von Videodaten zu erfassen, welche jeweils durch eine Vielzahl von Bildgebungsvorrichtungen aufgezeichnet werden;
einen Detektor (309), welcher konfiguriert ist, um ein Verfolgungsziel in irgendeinem der Rahmen zu detektieren, welche von dem Erfasser (306) erfasst werden;
einen Bestimmer (311), welcher konfiguriert ist, um, wenn der Detektor (309) das Verfolgungsziel aus zwei oder mehr Rahmen detektiert, welche durch zwei oder mehr Bildgebungsvorrichtungen unter der Vielzahl von Bildgebungsvorrichtungen aufgezeichnet werden, eine der zwei oder mehr Bildgebungsvorrichtungen als ein Ziel zu bestimmen, auf welchem eine Verfolgungsverarbeitung für das Verfolgungsziel auszuführen ist; und
einen Manager (313), welcher konfiguriert ist, um in einer Speichervorrichtung Positionsinformationen über das durch den Detektor (309) detektierte Verfolgungsziel in dem durch die Bildgebungsvorrichtung aufgezeichneten Rahmen zu speichern, in welcher die Verfolgungsverarbeitung auszuführen ist,
wobei, wenn der Detektor (309) detektiert, dass das Verfolgungsziel von einem äußeren Randabschnitt eines Bereichs verschwunden ist, welcher durch die Bildgebungsvorrichtung abgebildet wird, auf welcher die Verfolgungsbearbeitung auszuführen ist, der Manager (313) konfiguriert ist, um Folgendes auszuführen:
Unterbrechen des Speicherns von Positioninformationen über das Verfolgungsziel in dem Rahmen auf der Speichervorrichtung, und
Speichern von Informationen über eine Position, in welcher das Verfolgungsziel verschwunden ist, in der Speichervorrichtung, als Positionsinformationen über das Verfolgungsziel in dem Rahmen, bis zu einem Zeitpunkt nachdem das Verfolgungsziel auf einer der Vielzahl von Bildgebungsvorrichtungen neu detektiert wird.

2. Bildverarbeitungsvorrichtung nach Anspruch 1, wobei
der Bestimmer (311) eine der zwei oder mehr Bildgebungsvorrichtungen als ein Ziel bestimmt, auf welchem die Verfolgungsverarbeitung auszuführen ist, basierend auf mindestens einem von einem Bereich und einem Bewegungsbetrag des Verfolgungsziels zwischen entsprechenden Rahmen, in welchen das Verfolgungsziel von dem Detektor (309) detektiert wurde.

3. Bildverarbeitungsvorrichtung nach Anspruch 2, wobei
der Bestimmer (311) eine der zwei oder mehr Bildgebungsvorrichtungen als ein Ziel bestimmt, auf welchem die Verfolgungsverarbeitung auszuführen ist, basierend auf einem Verhältnis zwischen dem Bewegungsbetrag und dem Bereich des Verfolgungsziels.

4. Bildverarbeitungsvorrichtung nach Anspruch 1, wobei
der Bestimmer (311) als ein Ziel, auf welchem die Verfolgungsverarbeitung auszuführen ist, eine Bildgebungsvorrichtung unter den zwei oder mehr Bildgebungsvorrichtungen bestimmt, in welcher das Verfolgungsziel zum ersten Mal in dem Rahmen durch den Detektor (309) detektiert wird.

5. Bildverarbeitungsvorrichtung nach Anspruch 1, wobei
wenn das Verfolgungsziel nicht von dem Detektor (309) in einem ersten Rahmen detektiert wird, welcher durch die Bildgebungsvorrichtung aufgezeichnet wurde, auf welcher die Verfolgungsverarbeitung ausgeführt wird, der Manager (313) in der Speichervorrichtung Positionsinformationen des Verfolgungsziels in einem zweiten Rahmen vor dem ersten Rahmen speichert, und in welchem das Verfolgungsziel detektiert wurde, als Positionsinformationen des Verfolgungsziels in dem ersten Rahmen.

6. Bildverarbeitungsvorrichtung nach einem der Ansprüche 1 bis 5, wobei
auch wenn eine Bildgebungsvorrichtung, auf welcher die Verfolgungsverarbeitung auszuführen ist, durch den Bestimmer (311) unter der Vielzahl von Bildgebungsvorrichtungen umgeschaltet wird, der Manager (313) Positionsinformationen über dasselbe Verfolgungsziel in der Speichervorrichtung speichert wie dieselbe Datei.

7. Bildverarbeitungsvorrichtung nach einem der Ansprüche 1 bis 6, ferner umfassend:
einen Wiedergeber (305), der so konfiguriert ist, dass er die Videodaten, die von jeder der Vielzahl von Abbildungsgeräten erfasst wurden, in einem Anzeigebereich eines Anzeigegeräts wiedergibt und anzeigt; und
eine Bahnanzeigeeinheit (312), welche konfiguriert ist, um auf den Videodaten, welche durch die Bildgebungsvorrichtung aufgezeichnet werden, auf welcher die Verfolgungsverarbeitung ausgeführt wird, und durch den Wiedergeber (305) wiedergeben und angezeigt werden, eine Bahn des Verfolgungsziel zu überlagern, das durch den Detektor (309) in dem Rahmen der Videodaten zur Anzeige detektiert wird.

8. Bildverarbeitungsvorrichtung nach einem der Ansprüche 1 bis 7, wobei
der Detektor (309) das Verfolgungsziel basierend auf im Vorab gespeicherten Merkmalsinformationen über das Verfolgungsziel detektiert.

9. Bildverarbeitungsvorrichtung nach Anspruch 8, wobei die Merkmalsinformationen mindestens eine von einer Farbe des Verfolgungsziels und einer Form des Verfolgungsziels einschließen.

10. Bildverarbeitungsvorrichtung nach Anspruch 8 oder 9, ferner umfassend:
einen Bezeichner (307), welcher konfiguriert ist, um einen Bezeichnungsbereich zum Vorschreiben der Merkmalsinformationen über das Verfolgungsziel in dem Rahmen zu bezeichnen; und
ein Register (308), welches konfiguriert ist, um die Merkmalsinformationen basierend auf dem Bezeichnungsbereich zu registrieren.

11. Computerimplementiertes Bildverarbeitungsverfahren, umfassend:
Erfassen (S11) einer Vielzahl von Rahmen von Videodaten, welche jeweils durch eine Vielzahl von Bildgebungsvorrichtungen aufgezeichnet werden;
Detektieren eines Verfolgungsziels in irgendeinem der erfassten Rahmen;
Bestimmen (S25, S45), wenn das Detektieren das Verfolgungsziel aus zwei oder mehr Rahmen detektiert, welche durch zwei oder mehr Bildgebungsvorrichtungen unter der Vielzahl von Bildgebungsvorrichtungen aufgezeichnet werden, eine der zwei oder mehr Bildgebungsvorrichtungen als ein Ziel, auf welchem eine Verfolgungsverarbeitung für das Verfolgungsziel auszuführen ist;
Detektieren, dass das Verfolgungsziel von einem äußeren Randabschnitt eines Bereichs verschwunden ist, welcher durch die Bildgebungsvorrichtung abgebildet wird, auf welcher die Verfolgungsbearbeitung ausgeführt wird;
Unterbrechen des Speicherns von Positionsinformationen des Verfolgungsziels in dem Rahmen, in der Speichervorrichtung, und
Speichern von Informationen über eine Position, in welcher das Verfolgungsziel verschwunden ist, in der Speichervorrichtung, als Positionsinformationen über das Verfolgungsziel in dem Rahmen, bis zu einem Zeitpunkt nachdem das Verfolgungsziel auf einer der Vielzahl von Bildgebungsvorrichtungen neu detektiert wird.

12. Aufzeichnungsmedium (102, 103, 104, 110), welches einen computerlesbaren Code aufweist, welcher einen Computer (3) steuert, um das computerimplementierte Verfahren nach Anspruch 11 auszuführen.

## Revendications

1. Appareil de traitement d'images comprenant :
un acquéreur (306) configuré pour acquérir une pluralité de trames de données vidéo capturées respectivement par une pluralité de dispositifs d'imagerie ;
un détecteur (309) configuré pour détecter une cible de suivi dans l'une quelconque des trames acquises par l'acquéreur (306) ;
un détermineur (311) configuré pour déterminer, lorsque le détecteur (309) détecte la cible de suivi parmi deux trames ou plus capturées par deux dispositifs d'imagerie ou plus parmi la pluralité de dispositifs d'imagerie, un des deux dispositifs d'imagerie ou plus en tant que cible sur laquelle un traitement de suivi pour la cible de suivi doit être réalisé ; et
un gestionnaire (313) configuré pour stocker, sur un dispositif de stockage, des informations de position sur la cible de suivi détectée par le détecteur (309) dans la trame capturée par le dispositif d'imagerie sur lequel le traitement de suivi est en cours de réalisation,
dans lequel lorsque le détecteur (309) détecte que la cible de suivi a disparu d'une partie périphérique externe d'une zone imagée par le dispositif d'imagerie sur lequel le traitement de suivi est en cours de réalisation, le gestionnaire (313) est configuré pour :
arrêter le stockage d'informations de position sur la cible de suivi dans la trame dans le dispositif de stockage, et
stocker des informations sur une position au niveau de laquelle la cible de suivi a disparu dans le dispositif de stockage en tant qu'informations de position sur la cible de suivi dans la trame jusqu'à un point temps après que la cible de suivi est de nouveau détectée sur l'un de la pluralité de dispositifs d'imagerie.

2. Appareil de traitement d'images selon la revendication 1, dans lequel
le détermineur (311) détermine l'un des deux dispositifs d'imagerie ou plus comme étant une cible sur laquelle le traitement de suivi doit être réalisé, sur la base d'au moins l'une d'une zone et d'une amplitude de mouvement de la cible de suivi entre des trames respectives dans lesquelles la cible de suivi a été détectée par le détecteur (309).

3. Appareil de traitement d'images selon la revendication 2, dans lequel
le détermineur (311) détermine l'un des deux dispositifs d'imagerie ou plus comme étant une cible sur laquelle le traitement de suivi doit être réalisé, sur la base d'un rapport entre l'amplitude de mouvement et la zone de la cible de suivi.

4. Appareil de traitement d'images selon la revendication 1, dans lequel
le détermineur (311) détermine, comme étant une cible sur laquelle le traitement de suivi doit être réalisé, un dispositif d'imagerie dans lequel la cible de suivi est détectée pour la première fois dans la trame par le détecteur (309), parmi les deux dispositifs d'imagerie ou plus.

5. Appareil de traitement d'images selon la revendication 1, dans lequel
lorsque la cible de suivi n'a pas été détectée par le détecteur (309) dans une première trame capturée par le dispositif d'imagerie sur lequel le traitement de suivi est en cours de réalisation, le gestionnaire (313) stocke, dans le dispositif de stockage, des informations de position sur la cible de suivi dans une seconde trame devant la première trame et dans laquelle la cible de suivi a été détectée, comme étant des informations de position sur la cible de suivi dans la première trame.

6. Appareil de traitement d'images selon l'une quelconque des revendications 1 à 5, dans lequel
même lorsqu'un dispositif d'imagerie sur lequel le traitement de suivi doit être réalisé est commuté par le détermineur (311) parmi la pluralité de dispositifs d'imagerie, le gestionnaire (313) stocke des informations de position sur la même cible de suivi dans le dispositif de stockage que le même fichier de données.

7. Appareil de traitement d'images selon l'une quelconque des revendications 1 à 6, comprenant en outre :
un reproducteur (305) configuré pour reproduire et afficher les données vidéo capturées par chacun de la pluralité de dispositifs d'imagerie dans une zone d'affichage d'un dispositif d'affichage ; et
une unité d'affichage de trajectoire (312) configurée pour superposer, sur les données vidéo qui sont capturées par le dispositif d'imagerie sur lequel le traitement de suivi est en cours de réalisation et sont reproduites et affichées par le reproducteur (305), une trajectoire de la cible de suivi détectée par le détecteur (309) dans la trame des données vidéo pour un affichage.

8. Appareil de traitement d'images selon l'une quelconque des revendications 1 à 7, dans lequel
le détecteur (309) détecte la cible de suivi sur la base d'informations de caractéristiques concernant la cible de suivi enregistrée à l'avance.

9. Appareil de traitement d'images selon la revendication 8, dans lequel les informations de caractéristiques incluent au moins l'une d'une couleur de la cible de suivi et d'une forme de la cible de suivi.

10. Appareil de traitement d'images selon la revendication 8 ou 9, comprenant en outre :
un désignateur (307) configuré pour désigner une zone de désignation pour prescrire les informations de caractéristiques concernant la cible de suivi dans la trame ; et
un registre (308) configuré pour enregistrer les informations de caractéristiques sur la base de la zone de désignation.

11. Procédé de traitement d'images mis en œuvre par ordinateur comprenant :
l'acquisition (S11) d'une pluralité de trames de données vidéo capturées respectivement par une pluralité de dispositifs d'imagerie ;
la détection d'une cible de suivi dans l'une quelconque des trames acquises ;
la détermination (S25, S45), lorsque la détection détecte la cible de suivi parmi deux trames ou plus capturées par deux dispositifs d'imagerie ou plus parmi la pluralité de dispositifs d'imagerie, d'un des deux dispositifs d'imagerie ou plus comme étant une cible sur laquelle un traitement de suivi pour la cible de suivi doit être réalisé ;
la détection que la cible de suivi a disparu d'une partie périphérique externe d'une zone imagée par le dispositif d'imagerie sur lequel le traitement de suivi est en cours de réalisation ;
l'arrêt du stockage d'informations de position sur la cible de suivi dans la trame dans le dispositif de stockage, et
le stockage d'informations sur une position au niveau de laquelle la cible de suivi a disparu dans le dispositif de stockage comme étant des informations de position sur la cible de suivi dans la trame jusqu'à un point temps après que la cible de suivi est de nouveau détectée sur l'un de pluralité de dispositifs d'imagerie.

12. Moyen de support (102, 103, 104, 110) supportant un code lisible par ordinateur pour commander un ordinateur (3) pour réaliser le procédé mis en œuvre par ordinateur selon la revendication 11.
